# EUROPEAN PATENT APPLICATION

(11) **EP 2 317 436 A2**
(43) Date of publication of application: **04.05.2011**
(21) Application number: 10008150.4
(22) Date of filing: 04.08.2010
(51) Int. Cl.: G06F 9/46

(54) **Computer, computer system, and application execution method**

(30) Priority: 30.10.2009 JP 2009250115
(71) Applicant: Hitachi, Ltd., Chiyoda-ku Tokyo 100-8280 (JP)
(72) Inventor: Miyata, Tatsuhiko, Tokyo 100-8220 (JP); Takeda, Yukiko, Tokyo 100-8220 (JP); Yumoto, Kazuma, Tokyo 100-8220 (JP)
(74) Representative: Strehl Schübel-Hopf & Partner

(57) **Abstract**

A computer receives one or more processing requests from at least one or more clients through a network and executes an application for processing the received processing requests using a Java servlet. The processing requests each contain one or more addresses as the destinations of the processing requests. The computer is connected to a database including the following information: application information in which an identifier that uniquely identifies each application and binary logic for executing the application are brought into correspondence with each other; and adapter information in which the identifier and each of the addresses are brought into correspondence with each other. When the computer receives the processing request, it identifies the binary logic based on an address contained in the received processing request and executes the identified binary logic and thereby executes the application.

## Description

The present invention relates to computers and in particular to a computer that executes applications.

### BACKGROUND OF THE INVENTION

Hereafter, description will be given to the operation of the current Java HTTP (SIP) servlet (application logic). ("Java" is a registered trademark. This is the same with the following.)

### (Operation during Addition, Deletion, or Updating of Servlet)

To register, delete, or update application logic (including servlet logic) in a Java HTTP (SIP) servlet, a server is once stopped as a rule. The reason for this is as follows: if an application file is updated while a client is accessing a servlet, there is a possibility that an unforeseeable situation occurs. Examples of such situations include failure in updating due to blocking by an application file I/O, abnormal response to the accessing client, abnormal operation of the server, and the like.

To register new application logic or delete existing application logic, it is required to add or delete an external IF (URL). Since the IF requirements of servlet systems are set by web.xml (sip.xml) in a unified manner, there is a possibility in every IF that application logic is brought into an unforeseeable state while external IF setting is changed. To avoid this, a server is once stopped.

### (Definition of Input Value and Output Value of Servlet)

The input and output of each servlet are unified into the HTTP (SIP) ServletRequest class and the HTTP (SIP) ServletResponse class. Since the details of processing usually differ from servlet to servlet, input and output also differ. In the above input/output classes, "value name (key)" and "value" are managed by paired hashmaps. That is, in each servlet, a client does not explicitly designate a concrete input value or output value to the outside and acquires a required value from a hashmap in the HttpServletRequest class or the HftpServletResponse class through internal processing.

As one of the existing techniques, techniques in which the following processing is carried out are disclosed: when application logic is updated, generation management of application logic is carried out and an application module of an appropriate generation is executed in accordance with the version on the client side. (Refer to JP-A-2002-091774, for example.)

### (Update Processing for Application)

In this technique, application execution modules on the server side are first brought into correspondence with generation information and managed by an application management table in a database. Generation management information on the client is also managed by a different client management table on the database.

In the invention described in JP-A-2002-091774, the following processing is carried out when application logic is updated on the server side: new generation information is given and entered into an application management table. When a client corresponding to an application of an updated version is delivered, the generation information given to the application logic on the server side and the client are entered into a client management table. When a client attempts to access the server, generation information is verified from this client management table and an application of the relevant generation in the corresponding application management table is started.

### (Effect in JP-A-2002-091774)

In the invention described in JP-A-2002-091774, a server carries out the following processing even in a situation in which new and old generations exist together on the client side: the server recognizes generations and actuates an application matched with the generation on the client side. Therefore, it is unnecessary to synchronize the generation on the server side and that on the client side in updating. As a result, it is unnecessary to stop a system once for the alternation of generations and provide an update time.

### SUMMARY OF THE INVENTION

When the invention described in JP-A-2002-091774 is applied to the Java HTTP (SIP) Servlet, the following problem arises:

### (System Stop at Addition or Deletion of Application)

The invention described in JP-A-2002-091774 gives consideration only to generation management in application updating. Therefore, in addition and/or deletion of an external IF arising from addition and/or deletion of application logic, it is required to change the web.xml or sip.xml of a servlet. Because of this setting, the system of the servlet is temporarily stopped.

### (Input/Output Definition of Servlet)

In JP-A-2002-091774, the definition of input/output of each piece of application logic is not taken into account. The reason for this is possibly as follows: each client is taken as a dedicated client in generation management and the invention is on the assumption that in case of the same generation, a server application and the client side are matched with each other also with respect to input/output. However, the servlet basically does not identify a client as a dedicated client (a common Web browser or SIP client is used). In each piece of logic, input (argument) and output (return value) are explicitly defined on a program. When application logic is placed, therefore, it is required to convert a parameter specified by the Web browser or the SIP client into an argument of the logic.

### (Limitation on Implementation Form of Application Logic)

When application logic is implemented, it is required to inherit a class and overload a function in accordance with the Java Servlet code before the details of processing are implemented. Therefore, an existing program code cannot be utilized as application logic without change.

It is an object of the invention to provide a system using the Java HTTP (SIP) Servlet wherein application logic can be added or deleted without system stop by using a database. It is another object of the invention to provide a system wherein input/output information can be defined and eliminate limitation on the implementation form of application logic.

The following is a description of a representative example of the invention. The invention is a computer that receives one or more processing requests from at least one or more clients through a network and executes an application for processing the received processing requests using a Java servlet. Each of the processing requests includes one or more addresses as destinations of the requests for processing. The computer is connected to a database containing: application information in which identifiers for uniquely identifying the applications and binary logic for executing the applications are brought into correspondence with each other and adapter information in which the identifiers and the respective addresses are brought into correspondence with each other. When the computer receives the processing request, it identifies the binary logic based on the address contained in the received processing request and carries out the identified binary logic to execute the application.

According to an aspect of the invention, updating, including addition, deletion, and the like, of an application can be carried out without stopping the system.

### BRIEF DESCRIPTION OF THE DRAWINGS

FIG. 1 is an explanatory drawing illustrating a network of a system in a first embodiment of the invention;
FIG. 2 is a block diagram illustrating the functions of an application server in the first embodiment of the invention;
FIG. 3 is a block diagram illustrating the physical configuration of an application server in the first embodiment of the invention;
FIG. 4 is an explanatory drawing illustrating a servlet configuration file (web.xml) of the Java HTTP Servlet in the first embodiment of the invention;
FIG. 5 is an explanatory drawing illustrating a servlet configuration file (sip.xml) of the Java SIP Servlet in the first embodiment of the invention;
FIG. 6 is a sequence diagram indicating the operation of an application server and an information terminal in the first embodiment of the invention;
FIG. 7 is an explanatory drawing illustrating a SIP message for an information terminal SIP client in the first embodiment of the invention to transmit a processing request to an application server;
FIG. 8 is an explanatory drawing illustrating a SIP message for an application server in the first embodiment of the invention to return a processing result to an information terminal SIP client in response;
FIG. 9 is an explanatory drawing illustrating an HTTP message for an information terminal Web browser in the first embodiment of the invention to transmit a processing request to an application server;
FIG. 10 is an explanatory drawing illustrating an HTTP message for an application server in the first embodiment of the invention to return a processing result to an information terminal Web browser in response;
FIG. 11 is a flowchart illustrating the processing of a framework adapter in the first embodiment of the invention;
FIG. 12 is an explanatory drawing illustrating an adapter IF management table in the first embodiment of the invention;
FIG. 13 is an explanatory drawing illustrating an input value management table in the first embodiment of the invention;
FIG. 14 is an explanatory drawing illustrating an input/output class binary management table in the first embodiment of the invention;
FIG. 15 is a flowchart illustrating the processing of a framework unit in the first embodiment of the invention;
FIG. 16 is an explanatory drawing illustrating an application logic management table in the first embodiment of the invention;
FIG. 17 is a flowchart illustrating the processing of a framework adapter in the first embodiment of the invention;
FIG. 18 is an explanatory drawing illustrating an error information management table in the first embodiment of the invention;
FIG. 19 is an explanatory drawing illustrating an output value management table in the first embodiment of the invention;
FIG. 20 is a sequence diagram illustrating the processing of newly registering application logic in a framework unit in the first embodiment of the invention;
FIG. 21 is a sequence diagram illustrating the processing of deleting application logic from a framework unit in the first embodiment of the invention;
FIG. 22 is a sequence diagram illustrating the processing of updating application logic 46 already registered in a framework unit in the first embodiment of the invention to a new version;
FIG. 23 is a sequence diagram illustrating the processing of deleting only application logic of a predetermined generation in the first embodiment of the invention;
FIG. 24 is a flowchart illustrating the processing of deleting only a specific generation of application logic in the first embodiment of the invention;
FIG. 25 is an explanatory drawing illustrating a system that isolates access when a processing request is received from an information terminal in updating or deleting application logic in the first embodiment of the invention;
FIG. 26 is an explanatory drawing illustrating a servlet filter that subjects operation on the Web screen, displayed on an information terminal utilizing an application server in the first embodiment of the invention, to generation assignment;
FIG. 27 is a sequence diagram illustrating the processing of subjecting operation on the Web screen, displayed on an information terminal utilizing an application server in the first embodiment of the invention, to generation assignment;
FIG. 28 is a flowchart illustrating the processing of a filter that gives a generation number by the method of subjecting operation on the Web screen, displayed on an information terminal utilizing an application server in the first embodiment of the invention, to generation assignment;
FIG. 29 is an explanatory drawing illustrating a URL-generation number management table in the first embodiment of the invention;
FIG. 30 is an explanatory drawing illustrating a referer-generation number management table in the first embodiment of the invention;
FIG. 31 is an explanatory drawing illustrating a User-Agent-generation number management table in the first embodiment of the invention;
FIG. 32 is a sequence diagram illustrating the processing of carrying out generation assignment by a linkage pattern of application logic in the first embodiment of the invention; and
FIG. 33 is an explanatory drawing illustrating an application logic linkage generation management table in the first embodiment of the invention.

### DETAILED DESCRIPTION OF THE PREFERRED EMBODIMENTS

First, description will be given to the overview of a network of communication between a terminal and a server with respect to an application server of the invention and the physical configuration of the application server. Subsequently, description will be given to a logical structure for implementing the invention. Subsequently, description will be given to the flow of entire processing with reference to a sequence diagram indicating a case where a terminal transmits a processing request to a server. Further, description will be given to the details of operation in a server with reference to flowcharts and tables with respect to each point on the sequence diagram. Subsequently, description will be given to registration, deletion, and updating of application logic for an application server with reference to sequence diagrams and lastly description will be given to operation related to a method for generation management in application updating.

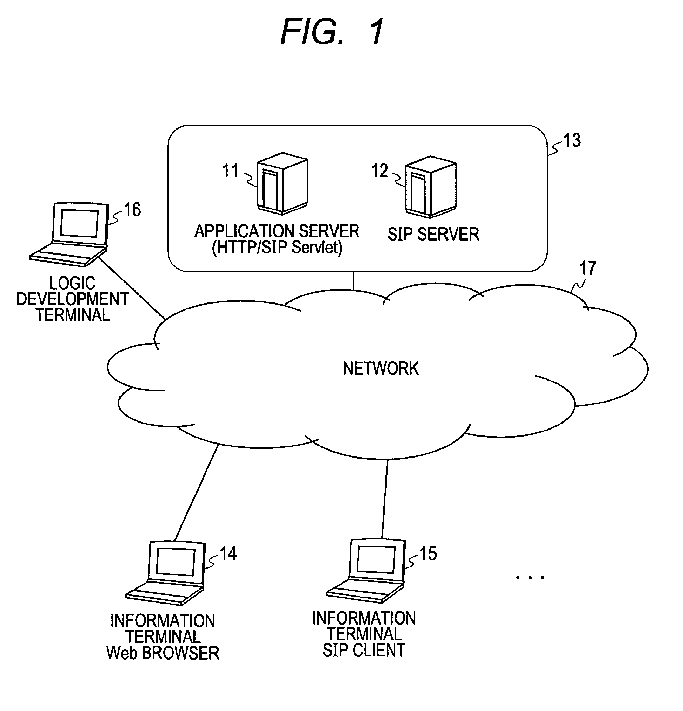

FIG. 1 is an explanatory drawing illustrating a network of a system in a first embodiment of the invention.

FIG. 1 is a network diagram illustrating how the following elements are connected together through a network 17: an information terminal Web browser 14 and an information terminal SIP client 15 that transmit processing requests to an application server 11 and a SIP server 12; a logic development terminal 16 for developing application logic that runs on the application server 11 and registering or deleting the developed application logic in or from the application server 11 or updating it; and a server group 13 including the application server 11, the SIP server 12, and other servers.

The application server 11 has the invention incorporated therein. The application server 11 is an HTTP and/or SIP Servlet server (hereafter, described as HTTP/SIP Servlet server) that operates under the concept of Java Servlet in accordance with the requirements for the following: the Java HTTP Servlet (Refer to Java Community Process, "JSR 315: JavaTM Servlet 3.0 Specification", [online], [Retrieved on October 20, 2009],
<URL:http://jcp.org/en/jsr/detail?id=315>, for example) and/or the Java SIP Servlet (Refer to Java Community Process, "JSR 116: SIP Servlet API", [online], [Retrieved on October 20, 2009], <URL:hftp://jcp.org/en/jsr/detail?id=116>, for example).

However, when the application server 11 is a server that operates under the concept of the Java Servlet, it may be a server in accordance with requirements other than the above requirements and the communication protocol used in the application server 11 is not limited to HTTP or SIP. The used HTTP Servlet or SIP Servlet may be of any version and there may be multiple application servers 11.

The information terminal Web browser 14 and the information terminal SIP client 15 are terminals that transmit processing requests to the application server 11 and the SIP server 12. In the following description, the information terminal Web browser 14 and the information terminal SIP client 15 will be collectively designated as information terminals.

The logic development terminal 16 is a development terminal for developing application logic that is caused to run in the application server 11 and registering or deleting the developed application logic in or from the application server 11 or updating it.

The SIP server 12 communicates with the information terminal SIP client 15 and transfers a SIP message transmitted by the information terminal SIP client 15 to a device as the destination of transmission when the information terminal SIP client 15 is comprised of a SIP Servlet.

The application server 11, SIP server 12, information terminal Web browser 14, information terminal SIP client 15, and logic development terminal 16 each include at least a processor, a memory, an input/output device, and a network interface.

Each of the above-mentioned servers and terminals transmits processing requests, returns processing results in response, and carries out communication for registering, deleting, and updating application logic through the network 17. For example, when the information terminal Web browser 14 and the information terminal SIP client 15 are located in ordinary households and they access various server groups 13 held by a communication common carrier, the network 17 as a junction network is the following: an access network held by the communication common carrier or a backbone network.

For example, when the logic development terminal 16 is located in the house of a developer or the premise of a logic development vendor, the network 17 may be a private line network prepared by a communication common carrier for accessing the server group 13. In the invention, however, there is no special limitation on the concrete routing of the network 17. The communication protocol in the network 17 need not be an IP protocol as long as the information terminal Web browser 14 and the information terminal SIP client 15, the server group 13, and the logic development terminal 16 can reach one another through the network 17.

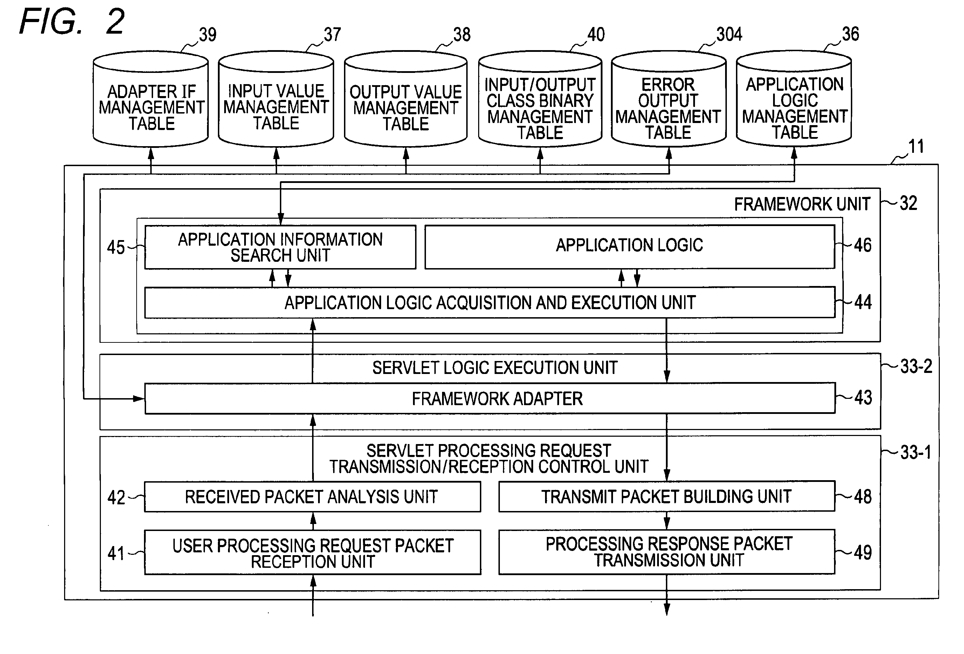

FIG. 2 is a block diagram illustrating the functions of the application server 11 in the first embodiment of the invention.

The block diagram in FIG. 2 illustrates the logical configuration of the functions implemented by software provided in the application server 11. Instead, part of each functional block may be implemented by hardware. Any other functional block configuration may be adopted as long as it enables the implementation of the same functions.

The application server 11 includes a servlet processing request transmission/reception control unit 33-1, a servlet logic execution unit 33-2, and a framework unit 32.

The servlet processing request transmission/reception control unit 33-1 includes: a user processing request packet reception unit 41 that receives request packets; a received packet analysis unit 42 that analyzes received request packets; a transmit packet building unit 48 that builds response packets to received request packets; and a processing response packet transmission unit 49 that transmits built response packets.

The servlet logic execution unit 33-2 includes a framework adapter 43. The framework adapter 43 updates and refers to the tables described later.

The framework unit 32 includes an application logic acquisition and execution unit 44, an application information search unit 45, and application logic 46. The application information search unit 45 updates and refers to the application logic management table 36 described later.

In the application logic management table 36, an input value management table 37, an output value management table 38, an adapter IF management table 39, an input/output class binary management table 40, and an error output management table 304, data is held in the tabular form and it is updated and referred to by the application server 11.

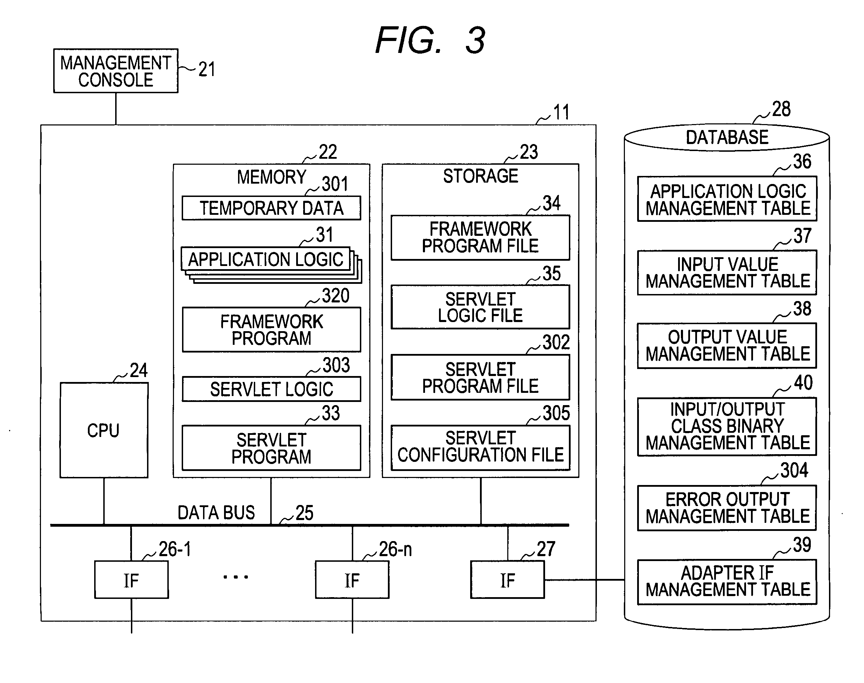

FIG. 3 is a block diagram illustrating the physical configuration of the application server 11 in the first embodiment of the invention.

FIG. 3 illustrates the configuration of hardware in which the functional blocks illustrated in FIG. 2 are incorporated.

The application server 11 includes a memory 22, a storage 23, CPU 24, a data bus 25, a network interface 26, and a database interface 27. The application server 11 is connected to a database 28 through the database interface 27. A management console 21 is also connected to the application server 11.

Modules for implementing the functional blocks illustrated in FIG. 2 are usually stored as files in the storage 23. More specific description will be given. The modules of the servlet processing request transmission/reception control unit 33-1 and the servlet logic execution unit 33-2 are stored in a servlet program file 302. The modules of servlet logic (framework adapter 43 in the invention) actually executed at the servlet logic execution unit 33-2 are stored in a servlet logic file 35. The modules of the application logic acquisition and execution unit 44 and application information search unit 45 (portions excluding the body of the application logic 46) of the framework unit 32 (enabler framework) are stored in a framework program file 34. The application logic 46 is stored as a table record in the application logic management table 36 in the database 28 illustrated in FIG. 3.

When actually carried out, the above-mentioned modules are transferred from their respective storage places to the memory 22 through the data bus 25 according to an instruction from the CPU 24 illustrated in FIG. 3. Then they are carried out by the CPU 24. In the memory 22, the framework program file 34 is expanded as a framework program 320; the servlet logic file 35 is expanded as servlet logic 303; and the servlet program file 302 is expanded as a servlet program 33. Multiple pieces of application logic 31 are expanded to execute the application logic 46. Temporary data 301 is temporary storage and is deleted when the servlet system determines that it is unnecessary after the completion of processing.

The network interface 26 establishes communication between the network 17 and application server 11 illustrated in FIG. 1 and multiple network interfaces may be used. The database interface 27 establishes communication between the database 28 and the application server 11.

Data required for each module to run is stored in the database 28 and/or the temporary data 301 in the memory 22. The temporary data 301 is referred to or updated as required. At this time, data stored in the database 28 is referred to or updated through the interface (IF) 27.

The database 28 and the server 11 may be formed of physically separate devices or may be logically configured in one and the same device.

The configuration file of the HTTP/SIP Servlet is stored in a servlet configuration file 305 in the storage 23 illustrated in FIG. 3. In this servlet configuration file 305, the following information is described: the definition of the name of servlet logic handled in the application server 11; and the configurations of external interfaces in the Java Servlet such as the correspondence between an addresses (URL in HTTP, SIP-URI in SIP) described in processing requests from the information terminal Web browser 14 and the information terminal SIP client 15 and servlet logic, filter setting for the above-mentioned addresses, and an operation policy taken when a non-existent address is accessed.

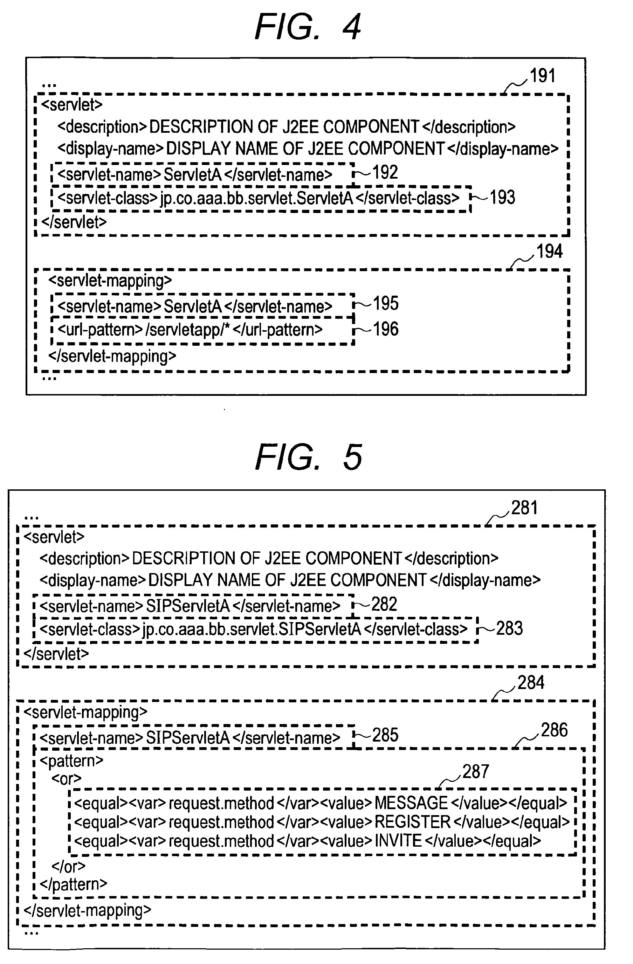

Detailed description will be given to the contents of description related to the following in the servlet configuration file 305 with reference to FIG. 4 and FIG. 5: a servlet logic name definition portion; and the correspondence between an address described in a processing request from an information terminal and servlet logic, that is, an external interface definition portion.

FIG. 4 is an explanatory drawing illustrating the servlet configuration file 305 (web.xml) of the Java HTTP Servlet in the first embodiment of the invention.

web.xml, or the servlet configuration file 305 of Java HTTP Servlet is described in the XML format. The description 191 sandwiched between "servlet" and "/servlet" illustrated in FIG. 4 is a portion in which the definition of the name of servlet logic is described. The description 194 sandwiched between "servlet-mapping" and "/servlet-mapping" is a portion in which the definition of an external interface is described.

Description will be given to the definition of the name of servlet logic shown in the description 191. In the description 191, description 192 is a portion enclosed in the "servlet-name" elements in the XML format and defines the name of servlet logic. In the servlet logic illustrated in FIG. 4, a servlet named as "ServletA" is defined.

In the description 191, description 193 is a portion enclosed in the "servlet-class" elements in the XML format and defines the actual Java class name corresponding to the name defined in the description 192. In the servlet logic illustrated in FIG. 4, "ServletA" class of a "jp.co.aaa.bb.servlet" package is defined as Java class.

The individual elements including the description 192 and the description 193 are enclosed in the "servlet" elements in the XML format shown in the description 191. A pair of each servlet logic name and an actual Java class name is thereby defined.

Description will be given to the external interface definition shown in the description 194. Description 195 is a portion enclosed in the "servlet-name" elements in the XML format and describes the name of a target servlet that defines an external interface. As this servlet name, the name of servlet logic defined in the servlet logic name definition in the description 191 is described. In the external interface definition illustrated in FIG. 4, "ServletA" defined in the description 191 is defined as a target servlet.

Description 196 is a portion enclosed in the "url-pattern" elements in the XML format and defines the name of the external interface. The external interface definition illustrated in FIG. 4 relates to the case of the Java HTTP Servlet and URL "/servletapp/*" is defined as an external interface.

The individual elements including the description 195 and the description 196 are enclosed in the "servlet-mapping" elements in the XML format shown in the description 194 and the external interface corresponding to the name of each piece of servlet logic is thereby defined.

When an information terminal transmits a processing request containing the URL of "http://[server name]/servletapp/*" ("*" is an arbitrary character string), the following takes place: a program described in the "jp.co.aaa.bb.servlet.ServletA" class of Java, defined under the servlet logic name of "ServietA" is executed as servlet logic by the servlet configuration file 305 illustrated in FIG. 4.

FIG. 5 is an explanatory drawing illustrating the servlet configuration file 305 (sip.xml) of the Java SIP Servlet in the first embodiment of the invention.

The description method of sip.xml as the servlet configuration file 305 of the Java SIP Servlet is basically the same as that of web.xml of the Java HTTP Servlet illustrated in FIG. 4.

In description 281, the name of servlet logic is defined in the XML format and in description 284, external interface definition is described. The description 281 is the same as the description 191 in the Java HTTP Servlet. In description 282, a servlet logic name is defined and in description 283, a Java class name actually invoked is defined.

The external interface definition in the description 284 is similarly the same as the description 194 in the Java HTTP Servlet. In description 285, the defined name of servlet logic is described as in the description 195. In description 286, meanwhile, an address name is described but the description method is different from that in the Java HTTP Servlet.

The description 286 is a portion enclosed in the "pattern" elements in the XML format and in the description 286, a SIP message method and a pattern definition such as URI are described. Description 287 is a portion where pattern definition is described.

The first line in the description 287 indicates a case where a SIP message method (defined by the "var" elements in the XML format) agrees with "MESSAGE" (defined by the "value" elements in the XML format). (The agreement is defined by the "equal" elements in the XML format.) Since the second and third lines are described in the same format, they respectively indicate a case where the SIP message method agrees with "REGISTER" and a case where it agrees with "INVITE."

Further, the three lines in the description 287 are enclosed in the "or" elements in the XML format in the description 286 to indicate a case where any condition of the three lines holds (or condition).

Therefore, sip.xml shown in FIG. 5 indicates that the following processing is carried out when a processing request containing any SIP message method, "MESSAGE," "REGISTER," or "INVITE," is transmitted by an information terminal: the application server 11 executes a program described in the "jp.co.aaa.bb.serviet.SIPServletA" class defined under the servlet logic name of "SIPServletA" as servlet logic.

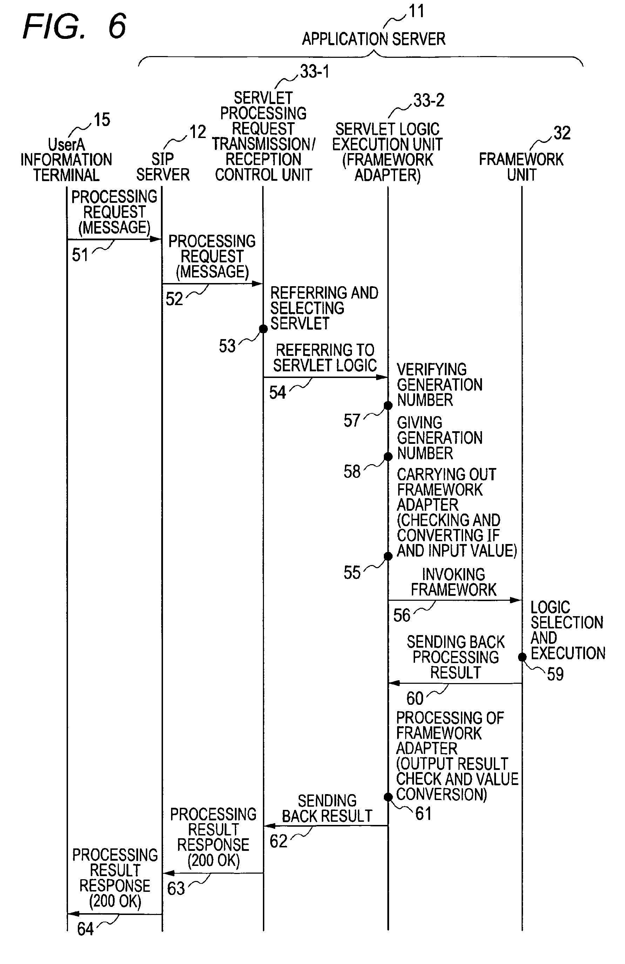

Description will be given to the overview of the following sequence with reference to the sequence diagram in FIG. 6: a sequence taken from when the information terminal SIP client 15 illustrated in FIG. 1 transmits a processing request to the application server 11 to when it receives a processing result.

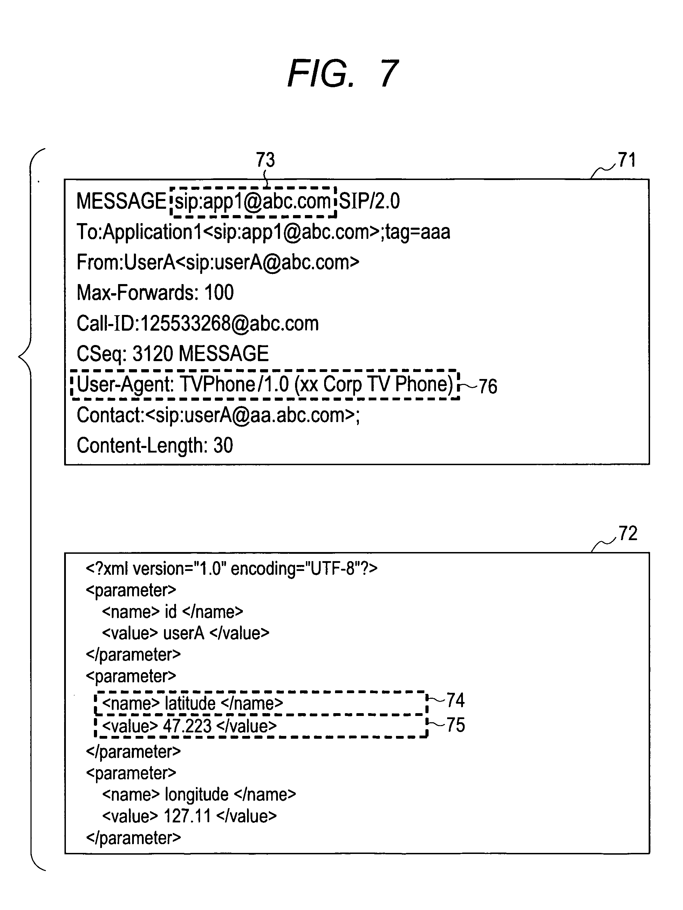

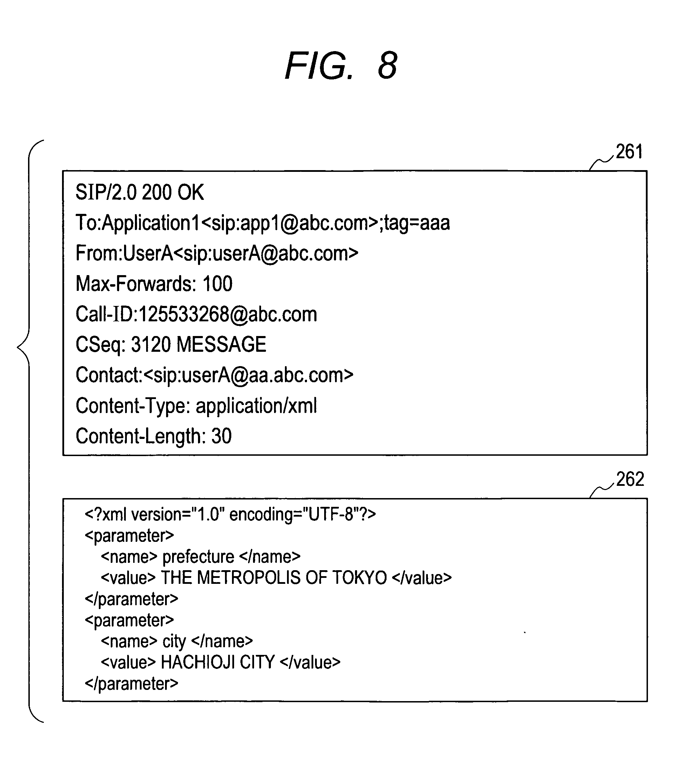

FIG. 6 is a sequence diagram indicating the operation of the application server 11 and information terminal SIP client 15 in the first embodiment of the invention. The sequence diagram in FIG. 6 shows operation carried out when the information terminal that communicates with the application server 11 is a SIP client. For transmission and reception messages, the formats illustrated in FIG. 7 and FIG. 8 referred to later are used. The user who uses the information terminal SIP client 15 is defined as UserA.

The information terminal that communicates with the application server 11 may be a Web browser.

At Step 51, first, the information terminal SIP client 15 transmits the SIP message illustrated in FIG. 7 to the SIP server 12. On receipt of the SIP message, the SIP server 12 acquires a destination based on the description 73, described later, in the received message and transfers this message to the application server 11 at Step 52. At this time, the SIP server 12 adds values of VIA header and the like to the message. Since the contents thereof are not covered in the invention, the description thereof will be omitted.

FIG. 7 and FIG. 8 illustrate examples of SIP messages.

FIG. 7 is an explanatory drawing illustrating a SIP message for the information terminal SIP client 15 in the first embodiment of the invention to transmit a processing request to the application server 11.

When the information terminal SIP client 15 communicates with the application server 11, SIP (The Internet Engineering Task Force, "IETF RFC3261," [online], [Retrieved on October 20, 2009], Refer to
<URL:http://www.ietf.org/rfc/rfc3261.txt?number=3261>) is used for the communication protocol.

The description 71 shown in FIG. 7 is a SIP request line portion and a header portion and the description 72 is a message body portion. The SIP message transmitted to the application server 11 contains the description 71 and the description 72.

FIG. 8 is an explanatory drawing illustrating a SIP message for the application server 11 in the first embodiment of the invention to return a processing result to the information terminal SIP client 15 in response.

FIG. 8 shows a response message from the application server 11 to the transmitted processing request message in FIG. 7. The description 261 shown in FIG. 8 is a SIP request line portion and a header portion and the description 262 is a message body portion. The response message from the application server 11 contains the description 261 and the description 262.

The SIP message illustrated in FIG. 7 transmits a processing request to the application server 11 by a style in which an input value pertaining to the processing request is described in the message body portion 72 using the MESSAGE method of SIP. However, there is no special limitation on the method or header configuration of SIP messages utilized in processing requests or the description position or description format of input values.

The description 71 contains description 73 that indicates the address of a processing request, that is, SIP-URI and description 76 that indicates the User-Agent header described later. The description 72 contains description 74 that indicates the value of a parameter and description 75 that indicates the numeric value of a parameter. The details of the descriptions 73 to 76 will be described later.

The SIP message shown in FIG. 8 uses a 200 OK response of SIP and transmits a processing response to the information terminal SIP client 15 by a style in which an output value as a processing result is described in the message body portion 262. However, there is no special limitation on the header configuration of SIP messages or the description position or description format of output values as in the example in FIG. 7.

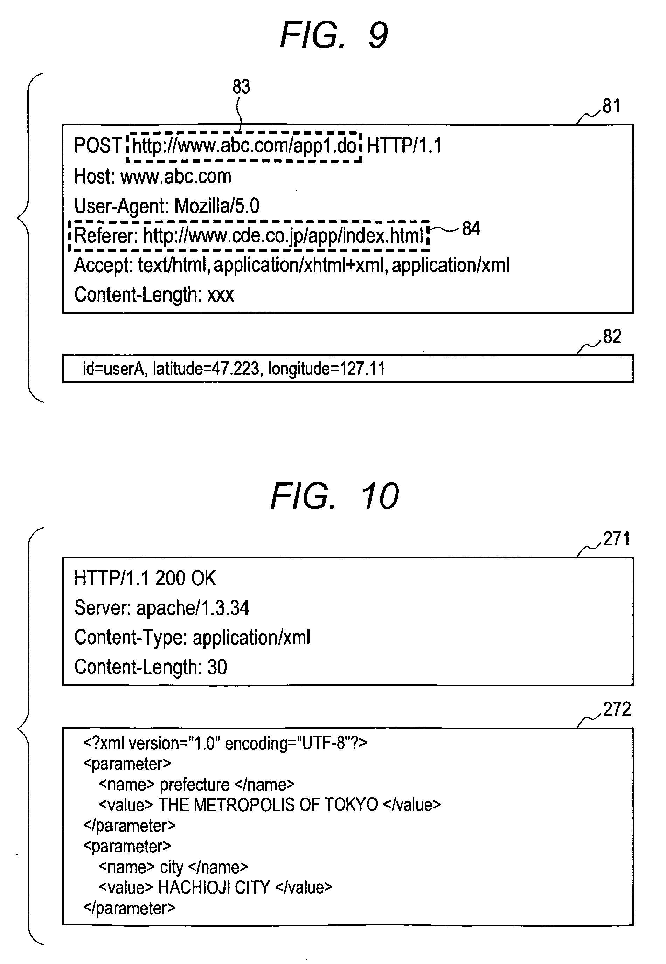

When in place of the information terminal SIP client 15, the information terminal Web browser 14 is used as an information terminal, the message transmitted to the application server 11 is an HTTP message. FIG. 9 and FIG. 10 illustrate HTTP messages.

FIG. 9 is an explanatory drawing illustrating an HTTP message for the information terminal Web browser 14 in the first embodiment of the invention to transmit a processing request to the application server 11.

FIG. 10 is an explanatory drawing illustrating an HTTP message for the application server 11 in the first embodiment of the invention to return a processing result to the information terminal Web browser 14 in response.

The description 81 shown in FIG. 9 is an HTTP request line portion and a header portion and the description 82 is a message body portion. The description 271 shown in FIG. 10 is an HTTP request line portion and a header portion and the description 272 is a message body portion.

This is a style in which the following measure is taken: the input value of a parameter is indicated in the message body portion using the HTTP POST method illustrated in FIG. 9 and an output value is indicated in the message body portion using the 200 OK response illustrated in FIG. 10. As in case of SIP message, however, there is no limitation on the HTTP method utilized in processing requests and responses, header configuration, or the description position or description format of input/output values.

An information terminal using a protocol other than SIP and HTTP and the application server 11 may communicate with each other and the information terminal and the application server 11 may be different from each other in protocol. Even in such a case, any communication protocol may be adopted as long as the application server 11 is a server in accordance with the concept of Java Servlet.

At Step 52 in FIG. 6, the SIP message transmitted by the SIP server 12 is received by the servlet processing request transmission/reception control unit 33-1 of the application server 11. Specifically, it is received by the user processing request packet reception unit 41 in FIG. 2. A packet of the received SIP message is transmitted to the received packet analysis unit 42 in the servlet processing request transmission/reception control unit 33-1. The processing of the received packet analysis unit 42 will be concretely described later.

Description will be given to the definition of servlet logic of the Java Servlet in this embodiment. In the Java Servlet, multiple sets of the following information are described in the web.xml illustrated in FIG. 4 and the sip.xml illustrated in FIG. 5 as the above-mentioned servlet configuration files: the name definition of each piece of servlet logic; and the correspondence between an address contained in a processing request message transmitted from an information terminal and servlet logic. As a result, it is possible to have multiple pieces of servlet logic and correspondence between each piece of servlet logic and an external interface definition on a single application server 11.

In the Java Servlet in this embodiment, only one piece of servlet logic and only one external interface definition are defined.

More specific description will be given. Only the framework adapter 43 illustrated in FIG. 2 is defined in servlet logic in this embodiment. The address of an external interface to this servlet logic of the framework adapter 43 is defined so that it is matched with all the URL patterns that can be processed in any application server 11. (Some examples will be taken. An address is described as a wild-card ("*") in the Java HTTP Servlet. Thus, to whatever URL an information terminal transmits a processing request, the servlet logic of the framework adapter 43 is invoked without exception. "MESSAGE" is defined as a SIP message method by the Java SIP Servlet. Thus the framework adapter 43 is invoked to SIP messages of every MESSAGE method transmitted by information terminals.)

At Step 53 in FIG. 6, the received packet analysis unit 42 determines servlet logic to be invoked by the servlet logic execution unit 33-2. For this purpose, it parses the received message and searches the servlet configuration file 305 illustrated in FIG. 3 by the address (description 73 illustrated in FIG. 7) of the processing request specified by the information terminal SIP client 15. The received packet analysis unit 42 thereby selects relevant servlet logic.

As mentioned above, however, the framework adapter 43 is specified as servlet logic with respect to all the addresses for which processing can be carried out at the application server 11 in the servlet configuration file 305 in this embodiment. As a result, the following takes place in the Java Servlet on the application server 11 whatever address is specified in a processing request transmitted from the information terminal SIP client 15: the received packet analysis unit 42 selects the framework adapter 43 as servlet logic without exception as long as there is a possibility that processing is carried out at the application server 11. In this embodiment, that is, only one type of servlet logic to be invoked is described in the servlet configuration file 305 and it is unnecessary to update this configuration file after startup of the system.

In this embodiment, as a result, at Step 53 in FIG. 6, the received packet analysis unit 42 selects the framework adapter 43 as servlet logic regardless of the value of SIP-URI "sip:app1@abc.com" shown in the description 73 in FIG. 7. The received packet analysis unit 42 transmits a processing request message to the framework adapter 43, selected at Step 53, provided in the servlet logic execution unit 33-2.

When the framework adapter 43 is selected as servlet logic at Step 53, the application server 11 calls the framework adapter 43 at Step 54 and carries out the framework adapter 43 at Steps 57, 58, and 55.

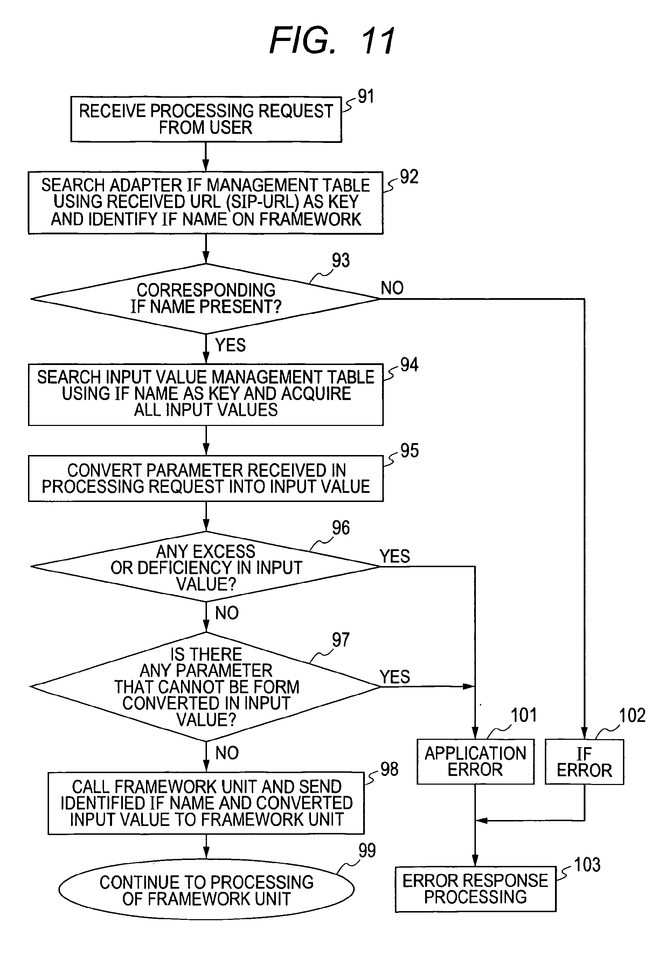

The generation management including the generation number verification at Step 57 and the generation number giving at Step 58 will be described later. Hereafter, detailed description will be given to the processing of the framework adapter 43 at Step 55 with reference to the flowchart shown in FIG. 11.

FIG. 11 is a flowchart illustrating the processing of the framework adapter 43 in the first embodiment of the invention.

At Step 91 in FIG. 11, first, the framework adapter 43 receives a processing request message from the received packet analysis unit 42.

The framework adapter 43 searches the adapter IF management table 39 using the following information as keys: address information acquired as the result of analysis of the processing request message by the received packet analysis unit 42, received at Step 91 (the result acquired at Step 53 in FIG. 6); and the framework adapter 43's own adapter identifier. (The above address information is, for example, URL information in case of Java HTTP Servlet and SIP-URI in case of Java SIP Servlet.) Then it identifies an IF name for identifying a piece of application logic 46 in the framework unit 32.

A possible example of the framework adapter 43's own adapter identifier is the framework adapter 43's own class name. However, there is no special limitation on the naming rules for adapter identifiers. The adapter identifier may have any value as long as the type of the framework adapter 43 can be identified. When there are not multiple framework adapters 43, it is unnecessary to identify the framework adapter 43.

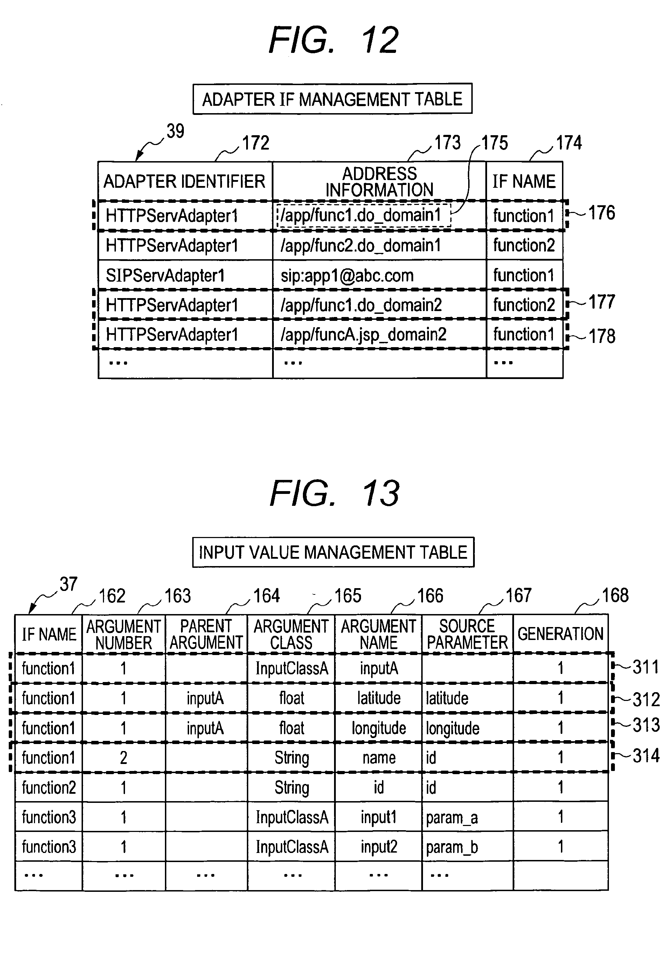

FIG. 12 is an explanatory drawing illustrating the adapter IF management table 39 in the first embodiment of the invention. The adapter IF management table 39 is searched by the framework adapter 43 at Step 92.

In the adapter management table 39, the values in the column 172 indicate adapter identifier; the values in the column 173 indicate address information; and the values in the column 174 indicate the IF name of application logic 46 invoked at the framework unit 32. The table configuration of this adapter management table 39 may be modified according to the specifications of Java Servlet, the operating specifications of framework, the description format for address information on the Java Servlet side, or the like.

With respect to the address information shown in the column 173, values may be stored in the format of "address information"_"domain name of server" as shown in the column 175 in the following cases: when the address for invoking the same application logic 46 is changed from application server 11 to application server 11; or when the address is identical but the application logic 46 to be invoked is changed.

As the result of this description, the following measure is taken in the adapter IF management table 39 illustrated in FIG. 11 as in, for example, record 176 and record 177: the address "/app/func1.do" of a server whose domain name is "domain1" and the address "/app/func1.do" of a server whose domain name is "domain2" are discriminated from each other and different IF names are given to them. Further, as in record 176 and record 178, the address "/app/func1.do" of a server whose domain name is "domain1" and the address "/app/funcA.jsp" of a server whose domain name is "domain2" are given an identical IF name "function1."

At the next step, or Step 93, the framework adapter 43 determines whether or not the identification of IF name at Step 92 has succeeded, that is, whether or not a corresponding IF name is present in the adapter IF management table 39. When it is determined that there is not a corresponding IF name, at Step 102, the framework adapter 43 determines that an IF error has occurred and sends an error response at Step 103.

In case of Java SIP Servlet, for example, at Step 103, the framework adapter 43 may return a 404 Not Found response, a 500 Server Internal Error response, or the like other than a 200 OK response as an error response. Or, it may describe that an error has occurred in the message body of a 200 OK response and return this response. The error response is transmitted to the information terminal SIP client 15 through the SIP server. In this invention, there is no special limitation on the response method.

When there is a corresponding IF name at Step 93, at the next step, or Step 94, the framework adapter 43 carries out the following processing to convert the input value transmitted by the user into a logic value specified by the application logic 46: it searches the input value management table 37 using the IF name on the framework unit 32 acquired at Step 92 and generation information as keys. The generation information will be described later.

FIG. 13 is an explanatory drawing illustrating the input value management table 37 in the first embodiment of the invention.

In the input value management table 37, the values in the column 162 indicate IF name; the values in the column 163 indicate the order of description of an argument specified when the application logic 46 is invoked; the values in the column 164 indicate the name of the parent member of this argument (value of the argument name in the column 166); the values in the column 165 indicate the type of an argument of Java of the application logic 46; the values in the column 166 indicate the name of an argument of the application logic 46; the column 167 indicates the parameter name of an input value contained in a processing request message from the information terminal SIP client 15; and the column 168 indicates the generation number information of the application logic 46. The table configuration of this input value management table 37 may be modified according to the argument specifications of the application logic 46, the operating specifications of framework, or the like.

At Step 94, the framework adapter 43 acquires the values of all the columns in a record in the column 162 identified by search. When there are multiple arguments of the application logic 46, when an argument is a Java class and the argument class has multiple members therein, or on other like occasions, the framework adapter 43 may identify multiple records.

With respect to all the records acquired at Step 94, the framework adapter 43 converts the processing request message from the information terminal SIP client 15 into the form of argument that can be utilized by the application logic 46 (Step 95).

In the input value management table 37 shown in FIG. 13, there are four records in which the column 162 indicating IF name corresponds to "fuction1": records 311, 312, 313, and 314. The record 311 is a parent class of Java for storing each parameter because the column 164 is null. Therefore, the arguments of "fuction1" are three arguments indicated by the records 312, 313, and 314.

The record 311 shown FIG. 13 defines the Java class name as the first argument of the application logic 46 as "InputClassA." When the application logic 46 is actually invoked, input values are stored in the members of this class. The class members for storing the input values are defined by the records 312 and 313.

The records 312 and 313 are brought into correspondence with "inputA" as a value in the column 166 of the record 311 by storing "inputA" in the column 164. It is thereby defined that the values of these records are members of the class defined in the record 311. As mentioned above, an argument name defined by a record of a parent class is defined by a parent argument in the column 164 in a record that defines a lower-order member or class. The parentage between records can be thereby defined. Even when an argument of the application logic 46 has multiple other members therein, therefore, the argument can be defined by the input value management table 37.

However, any other configuration may be used as the configuration of the input value management table 37 as long as it can express that an argument of the application logic 46 has member variables in multiple stages.

As mentioned above, the records 312 and 313 are lower-order members of the record 311 and in these records, the value of source parameter in the column 167 is not null. Therefore, it is required to convert input value information contained in the processing request message from the information terminal SIP client 15 according to these records 312 and 313.

In the record 312, the value in the column 167 indicating source parameter is "latitude." For this reason, in this embodiment, the framework adapter 43 carries out conversion on the following in the description 72, shown in FIG. 7, as a parameter of the processing request message sent from the information terminal SIP client 15: it converts the value 75 of an element in which the portion of "name" as the XML element is "latitude" as in the description 74 shown in FIG. 7 into an input value of the application logic 46.

The type of the input value after conversion is float type because the value of argument indicated in the column 165 of the record 312 is "float." Therefore, the framework adapter 43 converts the input value "47.223" shown in the description 75 into float type of Java and stores it in the member variable of lnputClassA class. At this time, it is required to instantiate InputClassA class defined in the record 311 for the argument of the application logic 46. Description will be given to the operation of instantiating InputClassA class.

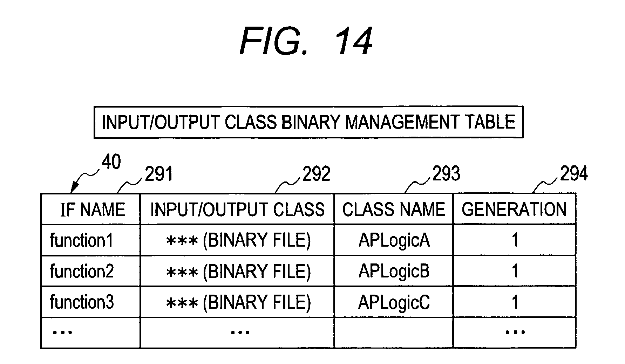

FIG. 14 is an explanatory drawing illustrating the input/output class binary management table 40 in the first embodiment of the invention.

In the input/output class binary management table 40, the values in the column 291 indicate IF name. The values in the column 292 indicate the Java program binary of a class utilized as input/output information. The values in the column 293 indicate the name of a class defined by a program binary stored in the column 292. The values in the column 294 indicate generation number.

With respect to Java class information of input/output values, all the pieces of class information need not be stored in the input/output class binary management table 40. For example, when the class of an input/output value is a class (List type or the like) prepared as a standard library of Java, a program binary should be included in a library file invoked by the framework program 320 by default.

Further, with respect to a highly versatile input/output value like a combination of a user ID and position information, for example, it may be defined as a common input/output class of the application logic 46 on the framework unit 32. And a program file of this class may be introduced into a library file invoked by the framework program 320 by default, similarly with classes managed by standard libraries of Java. In this case, all the pieces of class information need not be stored in the input/output class binary management table 40.

The program binary information stored in the input/output class binary management table 40 only has to be its own input/output class utilized by each piece of application logic 46.

At Step 95, the framework adapter 43 confirms the following with respect to the Java class name stored in the column 165 of the record 312 shown in the input value management table 37: it is neither a class defined by a Java standard library nor a common class defined on the framework unit 32. Then it searches the column 293 of the input/output value class binary management table 40 using the class name described in the column 165 of the input value management table 37 as a key and acquires a program binary from the column 292.

When the Java class name stored in the column 165 is either a class defined by a Java standard library or a common class defined on the framework unit 32, the framework adapter 43 proceeds to Step 98.

At Step 95, the framework adapter 43 expands the acquired program binary as an instance in the memory 22 illustrated in FIG. 2 and stores the value of each member included in this instance.

Also as for the record 313, the framework adapter 43 converts the value of "longitude" contained in the processing request message from the information terminal SIP client 15 into float type of Java and stores it as a member variable.

The thus generated instance of InputClassA class becomes an argument of the application logic 46 specified by the IF name "function1." Since the value of argument number indicated in the column 163 of each of the records 311 to 313 shown in FIG. 13 is "1 ", this argument is the first argument of the application logic 4.

The second argument of the arguments of the application logic 46 similarly specified by the IF name "function1" is "name" of Java String type indicated in the record 314 in FIG. 13. With respect to this second argument, similarly with the first argument, the value of input value "id" contained in the processing request message from the information terminal SIP client 15 is converted into String type of Java and taken as an argument.

At Step 95 shown in FIG. 11, the framework adapter 43 carries out the above-mentioned processing with respect to all the records acquired from the input value management table 37 shown in FIG. 13 at Step 94.

After the completion of conversion processing with respect to all the records at Step 95, the framework adapter 43 subsequently determines whether or not there is any excess or deficiency in the input values of the application logic 46 at Step 96.

The framework adapter 43 proceeds from Step 96 to Step 101 when, for example, the following takes place with respect to the records acquired from the input value management table 37 shown in FIG. 13: there is any value that is not described in input value information contained in the processing request message from the information terminal SIP client 15, that is, there is deficiency in the items of input value information contained in the processing request message; or all the pieces of input value information contained in the processing request message from the information terminal SIP client 15 cannot be brought into correspondence with the records acquired from the input value management table 37 shown in FIG. 13, that is, there is deficiency in records on the input value management table side.

The framework adapter 43 determines the content of the error to be an input value error at Step 101 and sends an error response indicating the input value error back to the information terminal SIP client 15 at Step 103. The reply method is the same with cases where an IF error is determined at Step 102. However, Step 102 and Step 101 are different from each other in the content of error.

When it is determined at Step 96 that there is no excess or deficiency in input value, the framework adapter 43 subsequently carries out the following processing at Step 97: it determines whether or not there is any record in which an input value could not converted into an argument of the application logic 46. An example of cases where an input value cannot be converted into an argument is a case where: the type of Java on the application logic 46 side is float type but the value of input value information contained in a processing request message from the information terminal SIP client 15 is a character string; and the character string cannot be converted into float type which is a numerical type.

When at Step 97, there is any record in which an input value could not be converted into an argument, at Step 101, the framework adapter 43 determines the content of the input to be an input error as at Step 96. Then at Step 103, it returns an error response to the information terminal SIP client 15.

At Step 97 in this embodiment, the framework adapter 43 makes a determination only with respect to an input value from the information terminal SIP client 15 and whether or not conversion into a Java type can be carried out. However, for example, the following processing may be added: processing in which the range of value is defined in the input value management table 37 illustrated in FIG. 13 with respect to each argument of the application logic 46; and when this range of value is exceeded, it is determined that an error has occurred. (An example of the above range of value is a range of numerics larger than 0 and character strings of 30 or less characters.)

The framework adapter 43 terminates Step 55 in FIG. 6 by the above processing.

When it is determined at Step 97 that there is no record in which an input value cannot be converted into an argument, the execution by the application logic 46 is feasible. Therefore, the framework adapter 43 invokes the processing of the framework unit 32 at Step 98 and the flow continues to the processing of the framework unit at Step 99.

Step 98 in FIG. 11 corresponds to invoking framework at Step 56 in FIG. 6. Specifically, the application logic acquisition and execution unit 44 of the framework unit 32 illustrated in FIG. 2 is called. At this time, the following information is transmitted as a processing request to the application logic acquisition and execution unit 44: the IF name acquired at Step 92 and the argument of the application logic 46 converted at Step 95 and other accompanying information (for example, generation information and the like).

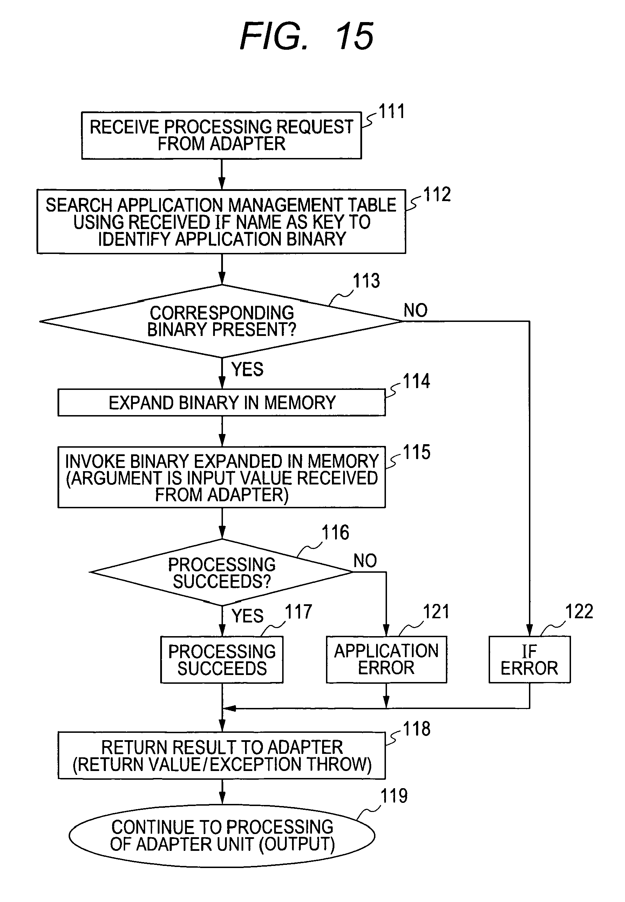

Detailed description will be given to logic selection and execution processing at Step 59, carried out on the framework unit 32 called at Step 56 in FIG. 6, with reference to the flowchart shown in FIG. 15.

FIG. 15 is a flowchart illustrating the processing of the framework unit 32 in the first embodiment of the invention.

At Step 111, the application logic acquisition and execution unit 44 of the framework unit 32 receives the processing request from the framework adapter 43. To acquire the program information of the application logic 46, at Step 112, it searches the application logic management table 36 using the IF name received from the framework adapter 43 as a key. When the generation information, described later, is also managed, a generation number is also included in the search key.

The actual search processing is carried out by the application information search unit 45 of the framework unit 32 illustrated in FIG. 2 accessing the application logic management table 36.

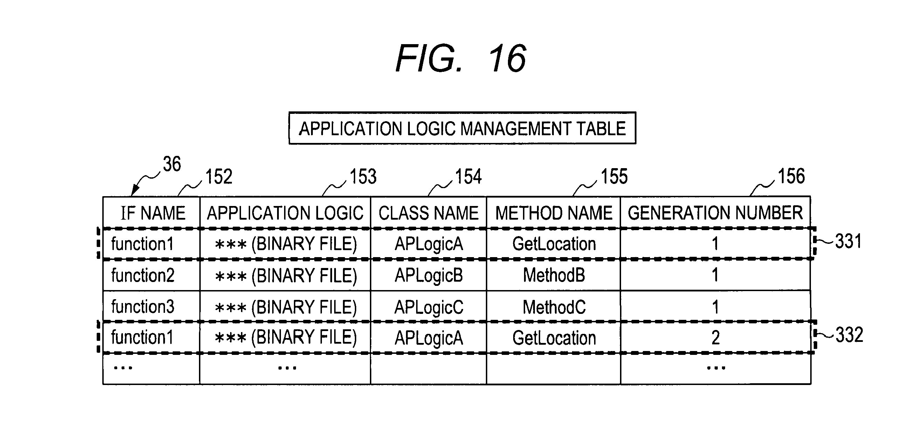

FIG. 16 is an explanatory drawing illustrating the application logic management table 36 in the first embodiment of the invention.

In the application logic management table 36, the values in the column 152 indicate the IF name of application logic 46; the values in the column 153 indicate the program binary of application logic 46; the values in the column 154 indicate the Java class name of application logic 46; the values in the column 155 indicate the Java method name of application logic 46; and the values in the column 156 indicate the generation number of each piece of application logic 46.

The application logic management table 36 may be constructed with a different configuration in accordance with the instantiation method of application logic 46, the operating specifications of the framework unit 32, or the like.

After searching the table 36 at Step 112, the application logic acquisition and execution unit 44 determines whether or not there is a corresponding binary at Step 113. When a record was acquired at Step 112, it is determined that there is a corresponding binary; and when a record could not be acquired, it is determined that there is not a corresponding binary.

When it is determined at Step 113 that there is not a corresponding binary, the application logic acquisition and execution unit 44 proceeds to Step 122 and determines the content of the error to be an IF error. At Step 118, subsequently, it returns the content of the error to the framework adapter 43 that called the framework unit. The method for returning the content of the error may be a Java method of throwing an exception, a method of returning error output, or the like and there is no special limitation in the invention.

When it is determined at Step 113 that there is a corresponding binary, the application logic acquisition and execution unit 44 carries out the following processing at Step 114: it expands the binary information acquired at Step 112 in the memory 22 illustrated in FIG. 3 in the format of the application logic 31.

The acquired binary information is instantiated as a class in accordance with the class name described in the column 154 shown in FIG. 16 and expanded in the memory 22. That is, there are a number of pieces of application logic 4633 illustrated in FIG. 3 equal to the number of pieces of application logic 46 managed on the application server 11 or the number of processing request messages from the information terminal SIP client 15.

To use the application logic 46 on the application server 11, one piece of application logic 46 may be instantiated to limit the number of binaries expanded in the memory 22 to one; and one instance may be used more than once for processing request messages from each information terminal. In this case, the number of pieces of the application logic 4633 becomes equal to the number of pieces of logic defined on the application server 11. Or, the binary of application logic 46 may be instantiated with respect to each processing request from each information terminal. In this case, a number of instances of application logic 46 equal to the number of processing requests are present in the memory 22. In this embodiment, either of the two methods mentioned above can be adopted and the method is not limited to one or the other.

After expanding the application logic 31 in the memory 22 at Step 114, the application logic acquisition and execution unit 44 actually invokes the application logic 46 at Step 115. The method described in the column 155 is used for the method name of the application logic 46. The argument group converted by the framework adapter 43 is used for the arguments of the application logic 46. Specifically, the application logic 46 is executed by the application logic acquisition and execution unit 44 illustrated in FIG. 2 invoking the application logic 46.

Thereafter, processing is carried out with respect to each piece of application logic 31. When the application logic acquisition and execution unit 44 receives the result thereof, it confirms the processing result at Step 116. When an output value indicating that an exception is outputted from the application logic 46 or processing fails or the like, at Step 121, the unit determines that an application error has occurred. At Step 118, subsequently, it replies that an error has occurred to the framework adapter 43. Similarly with the IF error at Step 122, the error reply method may be a Java method of throwing an exception, returning error output, or the like and there is no special limitation in the invention.

When it is determined at Step 116 that the processing has succeeded, the application logic acquisition and execution unit 44 determines that the processing has succeeded at Step 117. Then it replies that the processing has succeeded to the framework adapter 43 at Step 118. When the application logic 46 has an output value, the output value is also returned at the same time.

In the sequence diagram shown in FIG. 6, sending back processing result at Step 60 corresponds to Step 118 in FIG. 15. When the processing of the framework unit 32 is terminated, the flow continues to the processing of the framework adapter 43 that received the processing result as shown at Step 119.

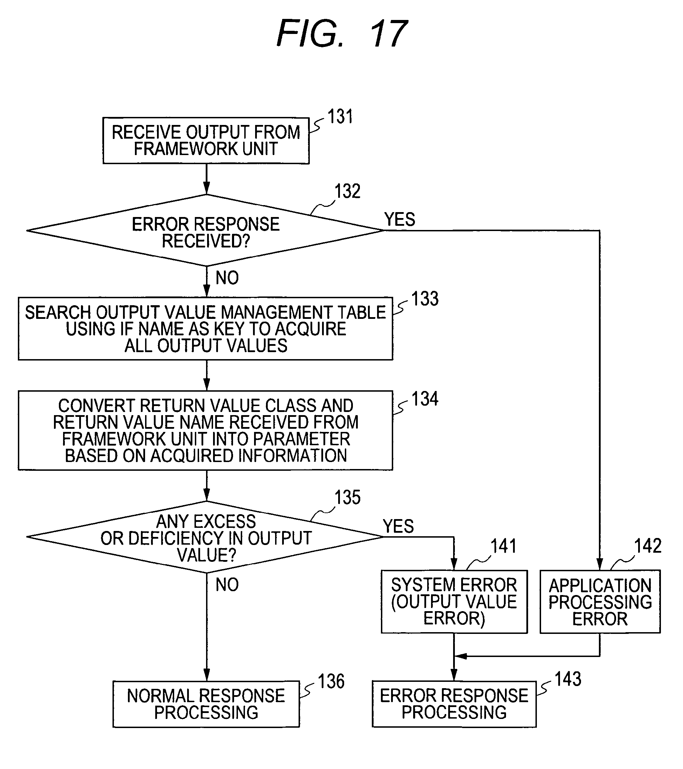

Detailed description will be given to the processing of the framework adapter 43 at Step 61 in FIG. 6 with reference to the flowchart shown in FIG. 17.

FIG. 17 is a flowchart illustrating the processing of the framework adapter 43 in the first embodiment of the invention.

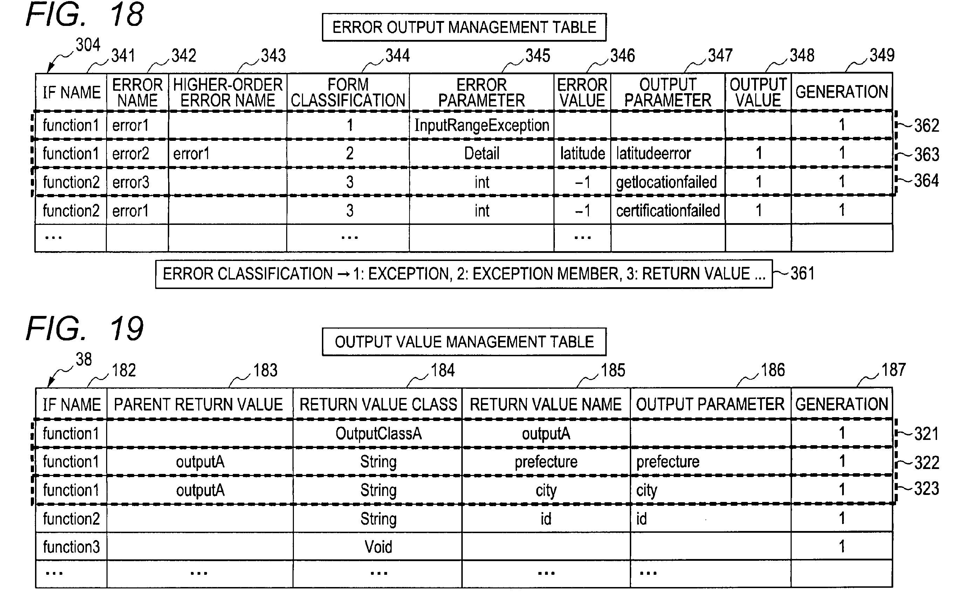

When the framework adapter 43 of the framework unit 32 receives the processing result from the application logic acquisition and execution unit 44 at Step 131, at Step 132, it determines whether or not an error response has been received. FIG. 18 is an explanatory drawing illustrating the error information management table 304 in the first embodiment of the invention. The error information management table 304 is a table for the application server 11 to manage error information outputted by each piece of application logic 46 at Step 134.

In the error information management table 304, the values in the column 341 indicate IF name and the values in the column 342 indicate the name of error. The values in the column 343 indicate the following when each piece of error information has a hierarchical structure like Java class and class member similarly with the input value information in the input value management table 37: error information as a parent, that is, the value of an error name, indicated in the column 342, of a higher-order error.

The values in the column 344 indicate the output form classification of error information. The values in the column 345 indicate the name of error parameter and vary according to the error classification, that is, the values in the column 344. The column 346 indicates a value related to the error parameter stored in the column 345 when the value is determined to be an error. The column 347 indicates the parameter name of error information contained in a processing error response transmitted to the information terminal SIP client 15 when an error occurs. The column 348 indicates the value of the parameter defined in the column 347. The column 349 indicates generation number.

The following is examples of values in the columns 344 and 345 in the error output management table 304.

The application logic 46 defined by the form of Java method uses as error output various methods including: a method of inserting a special value into a return value, a method of throwing an exception. The form classification in the column 344 is values for determining by what form this error information is outputted from the application logic 46.

As in the column 361 shown in FIG. 18, for example, "1" is defined as exception throw of Java; "2" is defined as a value of a member variable included in a Java exception; and "3" is defined as a value in a return value. When the classification of error is defined as mentioned above, the framework adapter 43 can determine a method for confirming an error as a Java program by a value in the column 344.

For example, the error in the record 362 whose form classification indicated in the column 344 is "1" can be checked by a method of catching an exception on a Java program. With respect to the error in the record 363 whose form classification indicated in the column 344 is "2," an exception can be caught and a member of the exception can be checked on a Java program. With respect to the error in the record 364 whose form classification indicated in the column 344 is "3," the content of a return value can be checked after invoking a method of the application logic 46.

When an error occurrence pattern is included as part of error information as mentioned above, it is possible to cope with various modes of error output of the application logic 46; this widens the width of Java programs that can be registered as application logic 46. That is, the Java class definition, Java inherit definition, return value definition, argument definition, and error output definition of application logic 46 can be registered without limitation.

The values in the column 345 vary according to the value of form classification in the column 344. Some examples will be taken. When the form classification is "1," a Java exception class name is stored in the column 344 as in the record 362. When the form classification is "2," a member name of an exception class is stored in the column 344 as in the record 363. When the form classification is "3," the Java type of a return value is stored as in the record 364.

As mentioned above, required information is stored in the column 345 with respect to each piece of form classification. As a result, for example, the following can be implemented. In case of the record 362, error information can be determined by searching the class of the caught Java exception and checking whether or not it agrees with the class stored in the column 345. In case of the record 363, error information can be determined by checking the value of a member of the name described in the column 345 with respect to the caught Java exception. In case of the record 364, error information can be determined by converting a return value of the application logic 46 into the type described in the column 345 and checking the value.

All the pieces of error information need not be stored in the error output management table 304. In case of an error outputted by a Java standard library, for example, it only has to be introduced beforehand as default processing in a program of the framework adapter 43. In case of a highly versatile error, such as too large number of characters and database connection failure, it is defined as a common error of the application logic 46 on the framework. Thus it only has to be introduced as default processing in a program of the framework adapter 43 similarly with errors outputted by a Java standard library. For error information stored in the error output management table 304, only its own error outputted by each piece of application logic 46 has to be described.

When an error response is received, the framework adapter 43 determines that an application error has occurred at Step 142 and returns an error response to the information terminal SIP client 15 at Step 143. In this case, the value stored in the column 348 as the parameter name described in the column 347 in the relevant error information is contained in the error response. The method for returning the error response is the same as that for the error response at Step 103 in FIG. 11.

When a normal response is received at Step 132, that is, it is determined that an error response has not been received, the framework adapter 43 carries out the following processing: processing reverse of the processing in FIG. 11 in which an input value the information terminal SIP client 15 gave to a processing request message is converted into a form for the application logic 46. That is, it converts an output value from the application logic 46 into the form of output value information given to a processing response sent to the information terminal SIP client 15. The processing method is substantially the same as input value conversion. At Step 133, first, the output value management table 38 is searched using an IF name as a key to acquire all the output values.

FIG. 19 is an explanatory drawing illustrating the output value management table 38 in the first embodiment of the invention.

In the output value management table 38, the values in the column 182 indicate IF name; the values in the column 183 indicate the name of the parent member of each of these return values (value of the return value name stored in the column 185); the values in the column 184 indicate the Java type of a return value of application logic 46; the values in the column 185 indicate a return value name of application logic 46; the column 186 indicates the parameter name of an output value contained in a processing response to the information terminal SIP client 15; and the column 187 indicates the generation number information of application logic 46. The output value management table 38 may be constructed with a different configuration in accordance with the return value specifications of the application logic 46, the operating specifications of framework, or the like.

At Step 133, the framework adapter 43 acquires the values of all the columns in a record in the output value management table 38 identified by search. When the return value of the application logic 46 is Java class and a return value class has multiple members therein, multiple records may be identified.

At Step 134, the framework adapter 43 converts a return value received from the application logic 46 into the form of a processing response to the information terminal SIP client 15 based on all the records acquired at Step 133.

In the output value management table 38 shown FIG. 19, there are three records whose IF name indicated in the column 182 is "function1": the records 321, 322, and 323. The record 321 indicates the information of a Java parent class for storing each parameter. Therefore, as return values, there are two values in the records 322 and 323.

In the record 321, the Java class name of a return value of the application logic 46 is defined as "OutputClassA." As a result, return values from the application logic 46 are of this class "OutputClassA."

In "OutputClassA," there are class members for storing the concrete values of return value and these members are defined by the records 322 and 323. The records 322 and 323 are brought into correspondence with the value "outputA" in the column 185 in the record 321 by specifying a value in the column 183 as "outputA." It is defined that the values in these records are members of the class defined in the record 321.

The relation between the column 183 and the column 185 is the same as the relation between the column 164 and the column 166 in the input value management table 37 shown in FIG. 13.

Any other configuration method may be used to configure this table as long as it can express that an argument of the application logic 46 has member variables in multiple stages, similarly with the input value management table 37.

As mentioned above, the records 322 and 323 are lower-order members of the record 321 and in these records, the value of output parameter in the column 186 is not null. Therefore, it is required to convert return values from the application logic 46 into processing responses to the information terminal SIP client 15 according to the rules of these records.

In the record 322, "prefecture" (value in the column 185) as an internal member of an instance with a Java class name of "OutputClassA" acquired as a return value from the application logic 46 is a first output. It indicates that this return value is outputted as the output parameter name of "prefecture" indicated in the column 186 to the information terminal SIP client 15 in a processing response. Therefore, a member variable "prefecture" is acquired from the value of a return value and this return value is converted into such a form that it is outputted as output parameter "prefecture."

This is the same with the record 323. A member variable "city" is acquired from a return value from the application logic 46 and this value is converted into such a form that it is outputted as the output parameter "city."

At Step 134 shown in FIG. 17, the above conversion processing is carried out on all the records acquired from the output value management table 38, shown in FIG. 19, at Step 133.

The description 262 illustrated in FIG. 8 is an example of the description of the result of output value conversion. In the invention, there is no special limitation on the description format of output values.

After output value conversion at Step 134, at Step 135, the framework adapter 43 determines whether or not there is any excess or deficiency in output conversion. Unlike input value conversion, output value conversion converts return values, outputted by the application logic 46 managed in the application server 11, according to the output value management table 38 managed in the same application server 11. Therefore, excess or deficiency in output value conversion should not be produced unless there is any contradiction in terms of system.

Therefore, when it is determined at Step 135 that there is excess or deficiency in output value, the framework adapter 43 determines that a system error has occurred at Step 141. Then it transmits a processing response stating this to the information terminal SIP client 15 at Step 143.

When it is determined at Step 135 that there is no excess or deficiency in output value, the framework adapter 43 makes a normal response to the information terminal SIP client 15 at Step 136. Specifically, the framework adapter 43 adds a parameter required for returning a processing response and calls the transmit packet building unit 48 as a functional block of the Java Servlet, illustrated in FIG. 2. Step 136 corresponds to sending back result at Step 62 in the sequence diagram shown in FIG. 6.

On receipt of the processing response replay request, the transmit packet building unit 48 generates such a communication packet for reply as illustrated in FIG. 8 and FIG. 10 in accordance with the specifications of each Java Servlet. Then it sends the generated communication packet to the processing response packet transmission unit 49. At Step 63 shown in FIG. 6, the processing response packet transmission unit 49 transmits a SIP message for processing result response to the SIP server 12.

The SIP server 12 checks the destination of the response SIP message and transfers this message to the information terminal SIP client 15 used by UserA at Step 64. As a result, the information terminal SIP client 15 used by UserA receives the response to the processing request transmitted at Step 51.

According to the invention, as described up to this point, the IF specifications acquired by web.xml and sip.xml are acquired by the framework adapter 43 searching the database 28 in the processing illustrated in FIG. 6. When the IF specifications are updated, therefore, it is unnecessary to update web.xml or sip.xml and as a result, they can be updated without stopping the servlet logic execution unit 33-2.

According to the invention, the information in each table can be locked using the database 28. Therefore, also when information in the database 28 is updated, it is unnecessary to stop the system.

According to the invention, at Step 55, input information contained in a processing request message transmitted from an information terminal is converted into an input value corresponding to application logic 46. At Step 61, similarly, an output value outputted from the application logic 46 is converted into an output value corresponding to the information terminal.

Hereafter, description will be given to the execution of application logic 46 using a generation number.

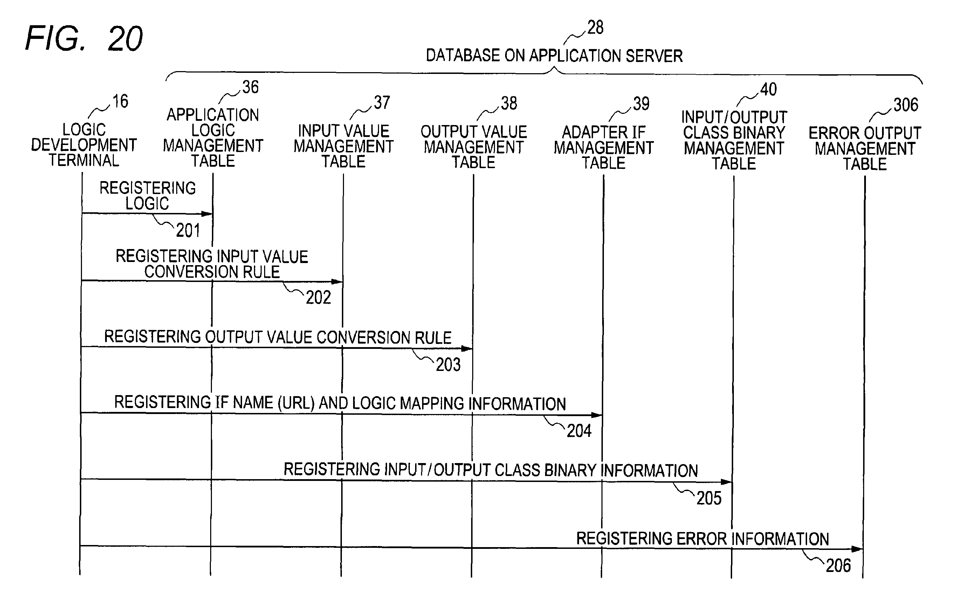

Description will be given to cases where the following processing is carried out from the logic development terminal 16 with reference to the sequence diagrams in FIG. 20, FIG. 21, FIG. 22, and FIG. 23: cases where application logic 46 is newly registered in or deleted from the framework unit 32 of the invention, logic is updated, or logic of a previous generation is deleted.

FIG. 20 is a sequence diagram illustrating the processing of newly registering application logic 46 in the framework unit 32 in the first embodiment of the invention.

The registration work described below is all carried out by the logic development terminal 16.

To newly register application logic 46, at Step 201, first, the logic development terminal 16 determines the IF name of the new application logic 46 and registers the IF name and the binary data of the program as a new record in the application logic management table 36. As the class name in the column 154, the class name of the new application logic 46 defined in the program binary of the registered new application logic 46 is registered. In the column 155, the logic method name defined by a class in the program binary of the new application logic 46 is registered. Since this is new registration, a record given "1" is registered as the generation number in the column 155.

At Step 202, subsequently, an input value conversion rule is registered in the input value management table 37 with respect to the argument information of the newly registered application logic 46. In the column 162, the IF name of the application logic 46 registered at Step 201 is registered. In the column 163, the order of arguments of the method of the application logic 46 is registered.

As an example, it will be assumed that the method of the application logic 46 is defined as: "public String MethodA (String id, int no){..."

Since the argument "id" is the first argument, the value in the column 163 is "1." Since the argument "no" is the second argument, the value in the column 163 is "2."

When an argument adopts the form of Java class and its lower-order members are defined in the input value management table 37, the value in the column 163 can be registered by either of the following methods: a method in which it is matched with the number of the parent class and a method in which a value is not included. In this embodiment, there is no special limitation on description method.

When this argument is a lower-order member of the parent class as mentioned above, the value of argument name in the column 166 for the parent class is registered in the column 164. In the column 165, the Java class name of this argument is registered. When the argument name of this argument is registered, a value is defined and this value is registered in the column 166. In the column 167, a parameter name this argument brings into correspondence with this argument in an input value contained in a processing request transmitted by an information terminal is registered. In the column 168, the same generation number as that of the application logic 46 registered at Step 201 is registered.

Thus all the arguments (when some argument is a Java class, including its lower-order members) of the application logic 46 are registered in the form of one-argument, one-record.

At Step 203, subsequently, an output value conversion rule is registered in the output value management table 38 with respect to the return value information of the newly registered application logic 46. In the column 182, the IF name of the application logic 46 registered at Step 201 is registered. When there is the parent class of an output value, the return value name in the column 185 of the parent class is registered in the column 183 similarly with the column 164 in the input value management table 37 in input value registration.

In the column 184, the Java class name of this return value is registered. When the return value name of this return value is registered, a value is defined and this value is registered in the column 185. When this return value is described as an output value in a processing response transmitted to an information terminal, a value which is an item name of the output value is registered in the column 186. In the column 168, the same generation number as that of the application logic 46 registered at Step 201 is registered.

Thus all the return values of the application logic 46 are registered in the form of one-return value, one-record. (When the return values are Java class, their lower-order members are included and there is a possibility that multiple return values are registered.)

At Step 204, subsequently, address information corresponding to the newly registered application logic 46 is registered. In the column 172, the identifier of a framework adapter that invokes this application logic 46 is registered. In this column 173, address information described in a processing request transmitted to the framework adapter 43 registered in the column 172 for an information terminal to execute this application logic 46 is registered. As mentioned above, however, address information with server domain information added thereto may be registered in the column 173 in some systems. In the column 174, the IF name of the application logic 46 registered at Step 201 is registered.

When the arguments and return values of the newly registered application logic 46 are a uniquely defined Java class, at Step 205, subsequently, the binary data of that program is registered. In the column 291, the IF name of the application logic 46 registered at Step 201 is registered. In the column 292, a program binary of a class utilized by input/output is registered. In the column 293, a class name defined by the program registered in the column 292 is registered. In the column 294, the same generation number as that of the application logic 46 registered at Step 201 is registered.

Up to this point, description has been given to the processing sequence, from Step 201 to Step 206, for newly registering application logic 46. The order of these steps in the processing may be changed according to the system.

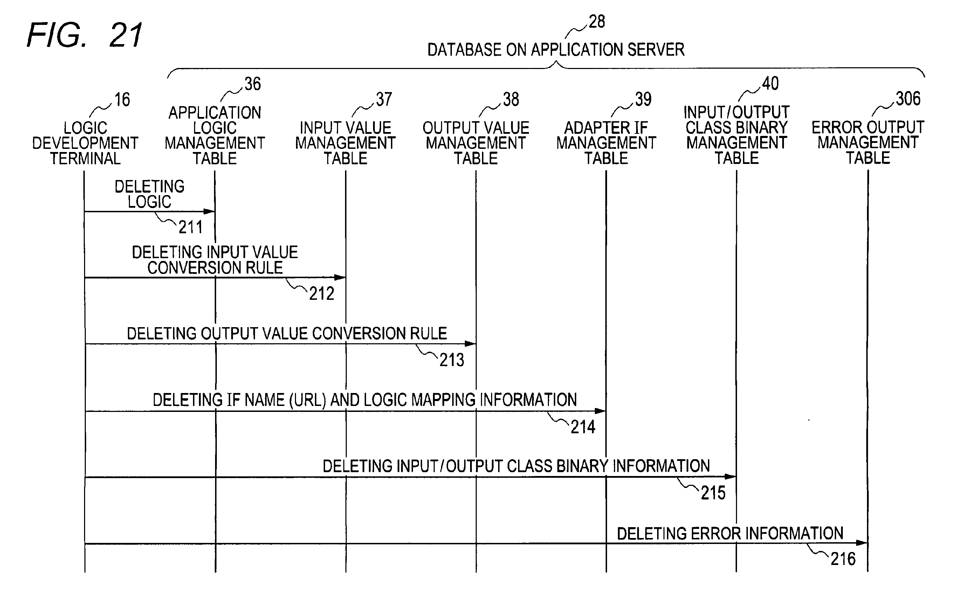

FIG. 21 is a sequence diagram illustrating the processing of deleting application logic 46 from the framework unit 32 in the first embodiment of the invention.

The processing of deleting the application logic 46 in this embodiment is carried out by deleting all the records related to the application logic 46 registered in each table in the order of Step 211 to 212 to 213 to 214 to 215 to 216. As in the new registration processing illustrated in FIG. 20, the logic development terminal 16 deletes all the records related to the application logic 46 from the following tables: the application logic management table 36, input value management table 37, output value management table 38, adapter IF management table 39, input/ output class binary management table 40, and error output management table 306.

Similarly with the new registration of the application logic 46, the order of steps in this processing may also be changed according to the system.

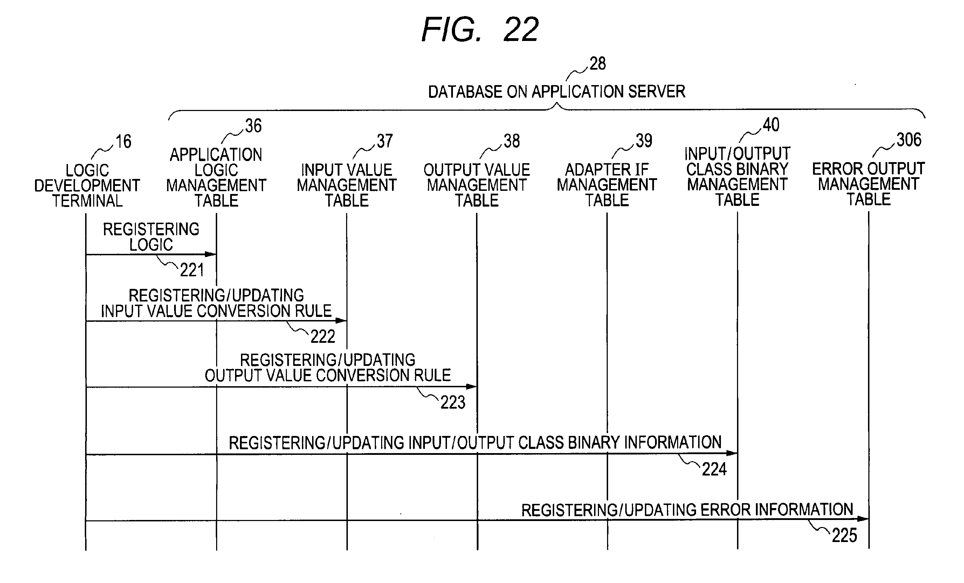

FIG. 22 is a sequence diagram illustrating the processing of updating application logic 46 already registered in the framework unit 32 in the first embodiment of the invention to a new version.

In the processing of updating the application logic 46, at Step 221, first, the logic development terminal 16 registers application logic 46 of the new version in the application logic management table 36. In this registration processing, the logic development terminal 16 in this embodiment does not overwrite the record of existing application logic 46. Instead, the logic development terminal 16 registers a new record in the application logic management table 36.

With respect to the record newly registered by the logic development terminal 16, the values in the columns 152, 154, and 155 in the application logic management table 36 are registered in adherence with the original values of the application logic 46 to be updated; and as the value in the column 153, the program binary of the new application logic 46 is registered.

As the generation number of the newly registered record, the following number is registered in the column 156: a generation number whose value is obtained by adding +1 to the generation number that is highest at the point of time of registration processing among the pieces of application logic 46 identical in IF name registered in the application logic management table 36. As an example, it will be assumed that the application logic 46 whose IF name is "function1" like the record 331 is updated. In this case, "2" obtained by adding +1 to the value "1" in the column 156 of the record 331 is registered as the generation number in the column 156 like the record 332.

In the description of this embodiment, a method in which generation numbers are represented by positive integers and generations are identified by adding +1 to a generation number each time of updating has been taken as an example. In this invention, however, there is no special limitation on generation management method.

Subsequently, the logic development terminal 16 respectively registers varied information related to the updated application logic 46 in the following tables at Steps 222, 223, 224, and 225: the input value management table 37, output value management table 38, input/output class binary management table 40, and error output management table 306. However, the details of these registrations differ depending on whether or not each piece of information is changed by updating.

When varied information is changed by updating, the details of processing are basically the same as the above-mentioned processing of newly registering application logic 46. However, as the value in the column indicating generation number in each table, the same value as the value registered in the column 156 in the application logic management table 36 is registered.

When varied information is not changed by updating, a record indicating the unupdated application logic 46 is extracted in each table. Then the value in the column indicating the generation number of the relevant record is updated to the generation number of the updated application logic 46 (value registered in the column 156 in the application logic management table 36).

After only the generation number is updated as mentioned above, the application server 11 can implement the following to run the updated application logic 46: it can use information of the same generation number to run the updated application logic 46. When the unupdated application logic 46 is run, the following takes place because the information of the application logic 46 of the same generation number is eliminated by the above updating: the application server 11 uses the information of the logic 46 having a generation number whose value is smallest "among the values equal to or higher than its own generation number" to run the unupdated application logic 46.

As an example, it will be assumed that with respect to the input value management table 37, the application logic 46 whose generation number is "1" is updated and application logic 46 whose generation number is "2" is registered but an input value is not changed. In this case, the record of input value information whose generation number "1" is updated to a generation number "2." It will be assumed that the application logic 46 is thereafter further updated and application logic 46 whose generation number is "3" is registered and an input value is changed. In this case, the record of input value information whose generation number is "2" is unchanged and a record of input value information whose generation number is "3" is newly registered.

In the above-mentioned case, the following processing is carried out when the application logic 46 of generation number "1" obtains input value information: it extracts application logic 46 with a generation number of the minimum value among generation numbers having values higher than 1 which is its own generation number. Since a record of input value information whose generation number is "2" still remains, this record is utilized. That is, input value information of a generation number "3" for which input value information was changed is not used. Instead, input value information of a generation number "2" as proper input value information can be used.

As in the processing of newly registering application logic 46, the order of the steps in this update processing may also be changed according to the system.

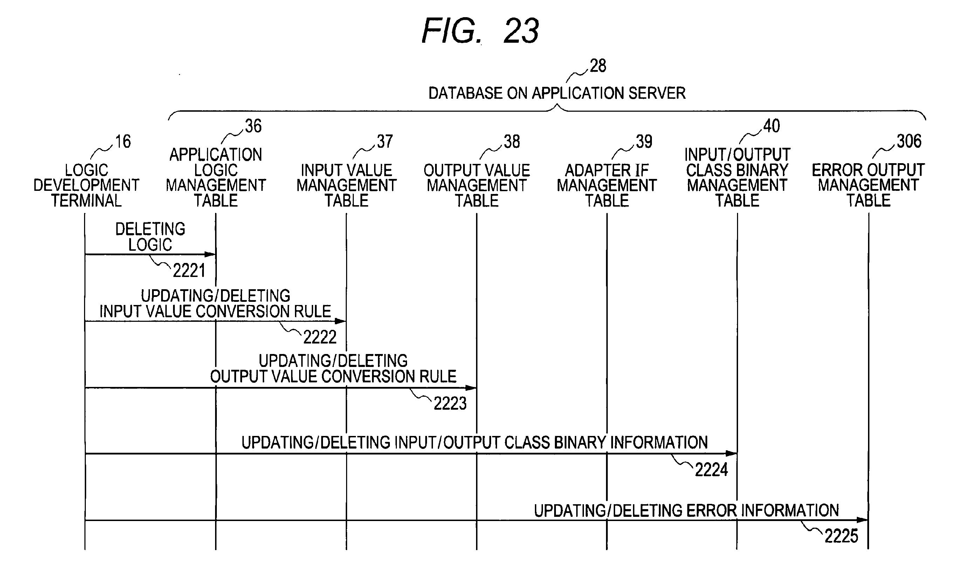

FIG. 23 is a sequence diagram illustrating the processing of deleting only application logic 46 of a predetermined generation in the first embodiment of the invention. It will be assumed that pieces of application logic 46 have been already registered in the framework unit 32 over multiple generations.

The processing of deleting only application logic 46 having a predetermined generation number among multiple pieces of application logic 46 is carried out as described below. At Step 2221, first, the record of the relevant application logic 46 is deleted from the application logic management table 36.

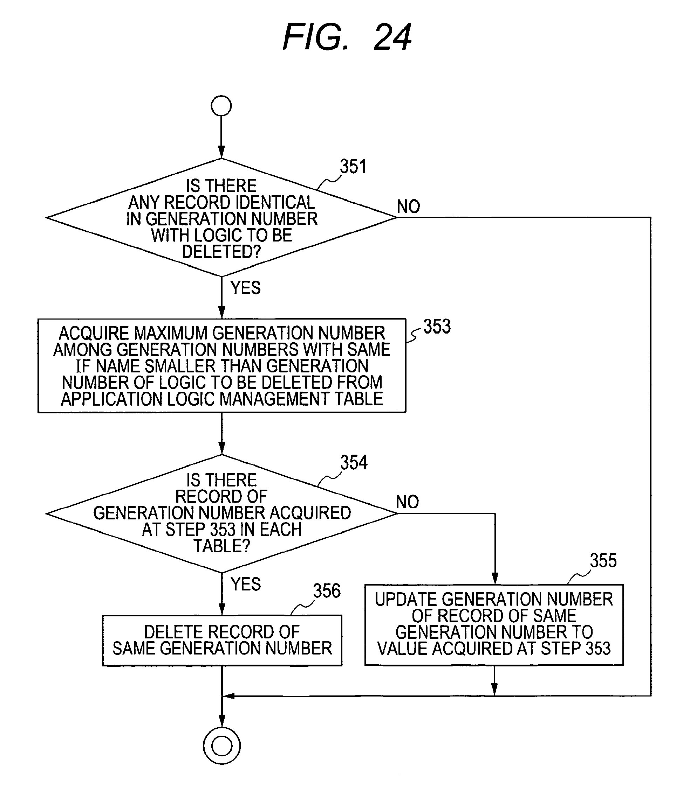

At Steps 2222, 2223, 2224, and 2225, subsequently, the logic development terminal 16 updates or deletes each piece of information in the following tables as required: the input value management table 37, output value management table 38, input/output class binary management table 40, and error output management table 306. Hereafter, description will be given to the processing procedure for updating and deletion with reference to the flowchart shown in FIG. 24.

FIG. 24 is a flowchart illustrating the processing of deleting only a specific generation of application logic 46 in the first embodiment of the invention.

When the application server 11 receives a request for logic deletion (Step 2221) from the logic development terminal 16, at Step 351, first, it determines whether or not the following record is present in each table: a record whose IF name and generation number are the same as those of the application logic 46 to be deleted.

When a relevant record does not exist, the application server 11 does not carry out update processing and terminates the processing since there is not a target of updating.

When there is a relevant record, at Step 353, the application server 11 acquires the following value: the value of generation number that is largest among those of the pieces of application logic 46 of the same IF name registered in the application logic management table 36 and smaller than the generation number of the application logic 46 to be deleted.

As an example, it will be assumed that in the application logic management table 36, there are pieces of application logic 46 whose generation number is "1," "3", "4," and "6" and the application logic 46 of a generation number "6" is to be deleted. In this case, the acquired generation number is "4." This processing is carried out to acquire a generation number immediately preceding that of the logic to be deleted among the pieces of application logic 46 of the same IF name present in the application logic management table 36.

In this processing of acquiring a generation number, a value obtained by subtracting 1 from the generation number of the application logic 46 to be deleted is not acquired. The reason for this is as follows: when the application logic 46 having a generation number from the value of which 1 has already been subtracted has already been deleted and generation numbers have been thinned out, a value obtained by simply subtracting 1 cannot be taken as the target of acquisition.

At Step 354, subsequently, the application server 11 determines whether or not a record of the generation number acquired at Step 353 is present in the application logic management table 36 as the target of updating and/or deletion.

When the record acquired at Step 353 is not present, at Step 355, the application server 11 updates the value in the column 156 of the record having the generation number of the application logic 46 to be deleted to the value acquired at Step 353.

The reason for this is as follows: when the application logic 46 of the generation number acquired at Step 353 is updated to the application logic 46 of the generation number as the target of deletion, there is no change in the target information; and the application logic 46 of the generation number acquired at Step 353 is generated with reference to the information of the generation number as the target of deletion. If information of the generation number of the application logic 46 to be deleted is directly deleted, varied information used by the application logic 46 of the generation number acquired at Step 353 becomes nonexistent or information of a wrong generation is referred to.

When a value of a record having a generation number as the target of deletion is updated to a value of the generation number acquired at Step 353, the following takes place: the application logic 46 of the generation number acquired at Step 353 can refer to varied accurate information.

When the record acquired at Step 353 is present, the application server 11 deletes the record acquired at Step 353 (Step 356). The reason for this is as follows: when the application logic 46 of the generation number acquired at Step 353 is updated to the application logic 46 of the generation number as the target of deletion, a change occurs in the target information and the records of varied information are newly registered; therefore, even though the relevant record is deleted, there is no influence on varied information utilized by the application logic 46 of the immediately preceding generation number acquired at Step 353.

Varied unnecessary information can be deleted by carrying out the above-mentioned processing with respect to each table. As in the processing of newly registering application logic 46, the order of the steps in this processing may also be changed according to the system.

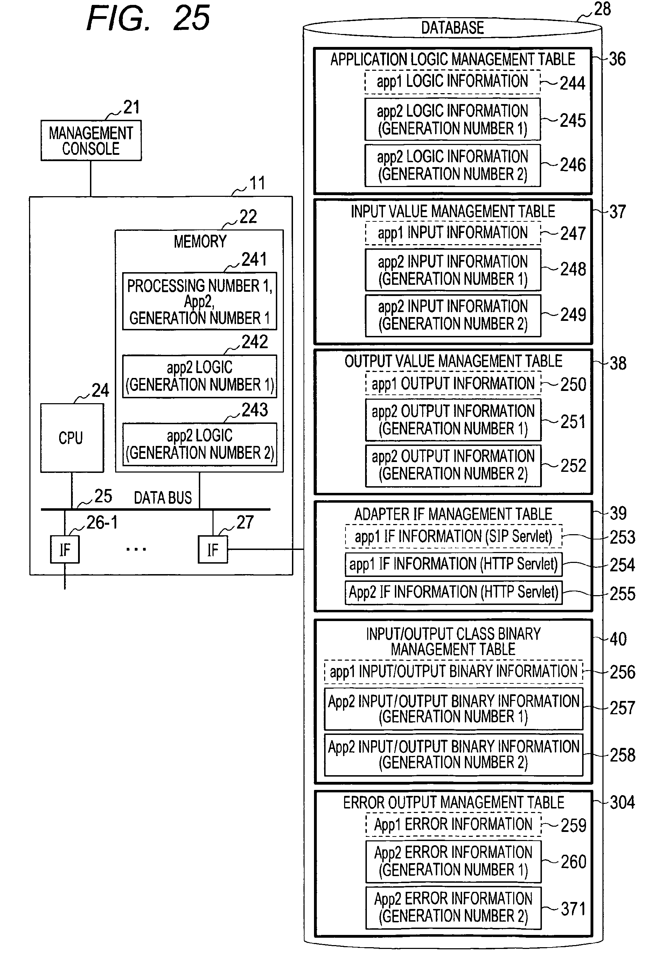

FIG. 25 is an explanatory drawing illustrating a system in which when application logic 46 in the first embodiment of the invention is updated or deleted and a processing request is received from an information terminal, the access is isolated.

FIG. 25 illustrates the internal configuration of the application server 11 for implementing the following when application logic 46 undergoes generation management: at the instant at which application logic 46 is updated or application logic 46 is deleted, application logic 46 of an appropriate generation is processed with respect to each information terminal that transmits a processing request. In addition to the description related to FIG. 25, description will be given to processing carried out by the application server 11 when updating or deletion of application logic 46 occurs in process of processing a request from a user.

When application logic 46 is updated, the processing described below is carried out in each of the following tables like the sequence shown in FIG. 22: the application logic management table 36, input value management table 37, output value management table 38, input/output class binary management table 40, and error information management table 304. Information related to application logic 46 of a new generation number is newly registered or the generation number of existing information is updated like the following illustrated in FIG. 25: logic information 246, input information 249, output information 252, input/output binary 258, and error information 371. In the example illustrated in FIG. 25, a case where all is newly registered (contents are changed from the previous generation number) is described.

When application logic 46 of the next generation number is registered while processing is being carried out with respect to some generation number, the following takes place: two or more records different in generation number become existent in each table with respect to the same application logic 46 like the following illustrated in FIG. 25: logic information 245 and 246, input information 248 and 249, output information 251 and 252, input/output binary 257 and 258, and error information 260 and 371.

To prevent the utilization of data of a wrong generation number even in such a case, the application server 11 carries out the following processing: it confirms the generation number of the application logic 46 executed from now at Step 57 shown in FIG. 6; thereafter, it stores the generation number of the application logic 46 currently processed in the memory 22 in the application server 11, like the memory 241 illustrated in FIG. 25, at Step 58.

In the memory 241, a processing number and the generation number are stored. The processing number is an identifier unique within the application server 11 given for the application server 11 to identify the processing request currently processed each time processing is started. In the processing at Step 58 and the following steps in FIG. 6, a generation number included in the memory 241 is used without exception when application logic 46 information is acquired from each table. Storing a generation number at start of processing as mentioned above makes it possible to acquire application logic 46 information of a correct generation number even in the subsequent processing.

To delete application logic 46, the application server 11 deletes information related to the application logic 46 from each of the following tables as in the sequence diagram shown in FIG. 21: the application logic management table 36, input value management table 37, output value management table 38, adapter IF management table 39, input/output class binary management table 40, and error information management table 304. Examples of the deleted information include the logic information 244, input information 247, output information 250, input/output binary information 256, and error information 259 illustrated in FIG. 25.

However, when some application logic 46 is deleted while the application logic 46 is being processed, the records related to the application logic 46 are deleted from each table like the following illustrate in FIG. 25: the logic information 244, input information 247, output information 250, input/output binary information 256, and error information 259. If this state occurs, the following event takes place: when application information is required in process of processing, a record does not exist and the processing cannot be carried out.

To prevent this, the application server 11 refers to the memory 22 illustrated in FIG. 25 when it deletes application logic 46 and refers to all the pieces of data equivalent to the memory 241. When data utilizing the application logic 46 to be deleted can be extracted here, deletion processing is suspended once and it is deleted when utilized information becomes all nonexistent.

With respect to the above-mentioned processing, however, any other method may be used as long as the following can be implemented: the flow in process can refer to information of a correct generation when application logic 46 is updated and it is possible to prevent contradiction from being produced even though application logic 46 is deleted when there is a flow in process.

Description will be given to a method for assigning which generation of application logic 46 should be invoked to a processing request from each user with pieces of application logic 46 of multiple generations registered. Hereafter, four examples will be taken with respect to a method for assigning application logic 46 in the invention and they will be described one by one.
1. Generation assignment for operation on a Web screen displayed in an information terminal utilizing the application server 11
2. Generation assignment utilizing a referrer (transmission source URL information) when a processing request is received
3. Generation assignment utilizing User-Agent header of SIP
4. Generation assignment by a linkage pattern of application logic 46

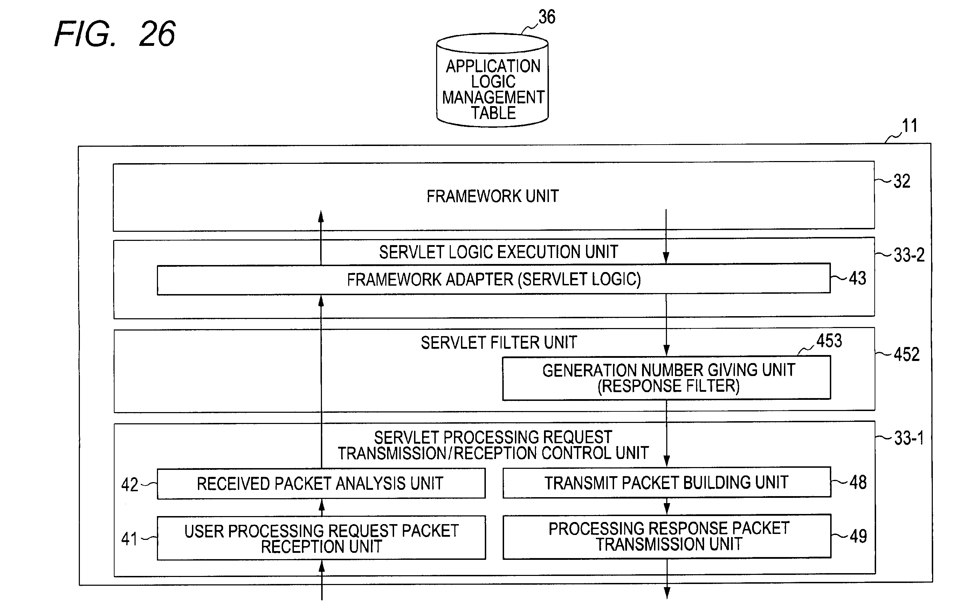

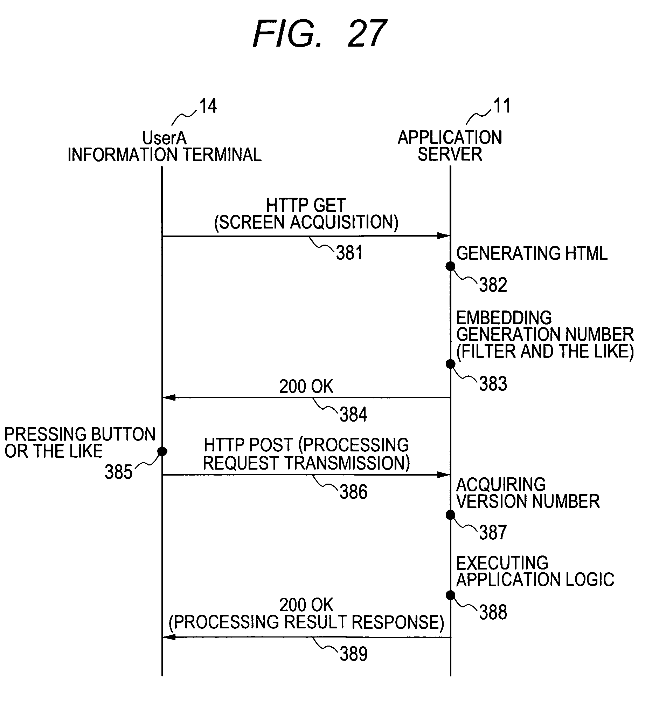

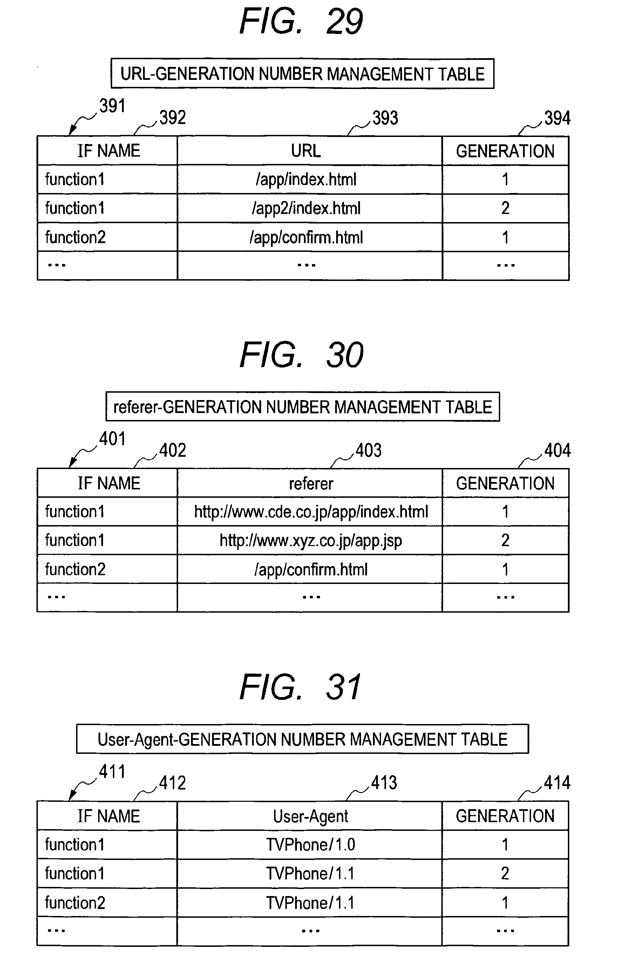

First, description will be given to a method in which generation assignment is carried out for operation on a Web screen displayed utilizing the application server 11 with reference to the following: the sequence diagram shown in FIG. 27, the table configuration diagram shown in FIG. 29, and the block diagram shown in FIG. 26.

Since the application server 11 also has the functions of Java Http Servlet, it is also capable of transmitting HTML to users and controlling the display of Web screens. In this embodiment, the application server 11 embeds the generation number of application logic 46 to be utilized using a hidden tag or the like for the following portion on the HTML generated by the application server itself: a portion (form tag or the like the HTML screen) where an action for a user to transmit a processing request to the application logic 46 is described.

Description will be given to the procedure therefor with reference to the sequence diagram shown in FIG. 27 and the explanatory drawing shown in FIG. 26.

FIG. 26 is an explanatory drawing illustrating a servlet filter that carries out generation assignment for operation on a Web screen displayed in an information terminal utilizing the application server 11 in the first embodiment of the invention.

The configuration illustrated in FIG. 26 is obtained by adding a servlet filter unit 452 to the configuration of the application server 11 illustrated in FIG. 2. The servlet filter unit 452 includes a generation number giving unit 453. The other respects, including the framework unit 32, the servlet processing request transmission/reception control unit 33-1, and the like, are the same as in the configuration illustrated in FIG. 2. Each database connected to the application server 11 is also the same as each database illustrated in FIG. 2.

The framework adapter 43 generates the HTML of a screen displayed in an information terminal. The generation number giving unit 453 gives a generation number to the generated HTML.

FIG. 27 is a sequence diagram illustrating the processing of carrying out generation assignment for operation on a Web screen displayed in an information terminal utilizing the application server 11 in the first embodiment of the invention.

At Step 381, first, the information terminal Web browser 14 used by UserA transmits HTTP GET (screen HTML acquisition request) in which URL is specified to the application server 11 to display a Web screen in its own browser. This HTTP GET is received by the user processing request packet reception unit 41 illustrated in FIG. 26 and its contents are analyzed by the received packet analysis unit 42. When the analyzed HTTP GET is transmitted to the servlet logic execution unit, servlet logic 303 to be invoked is selected from among the pieces of servlet logic 303 registered in the servlet logic execution unit 33-2.

This series of processing is the same as the processing of Steps 53 and 54 shown in FIG. 6. In case of Web screen display or the like utilizing Java HTTP Servlet that can be achieved by only existing technology, a combination of URL and servlet logic only has to be described in the configuration file illustrated in FIG. 4 like ordinary HTTP Servlets.

Thereafter, the application server 11 calls the framework adapter 43 and generates HTML at Step 382 in FIG. 27.

Thereafter, the application server 11 embeds generation number information in a portion requiring the HTML generated at Step 382 by the generation number giving unit 453 of the servlet filter unit 452 (Step 383). The servlet filter unit 452 is a function provided in the existing Java Servlet. It can invoke a free filter program by describing a URL pattern for carrying out the filter and filter logic to be invoked in the servlet configuration file described with reference to FIG. 4.

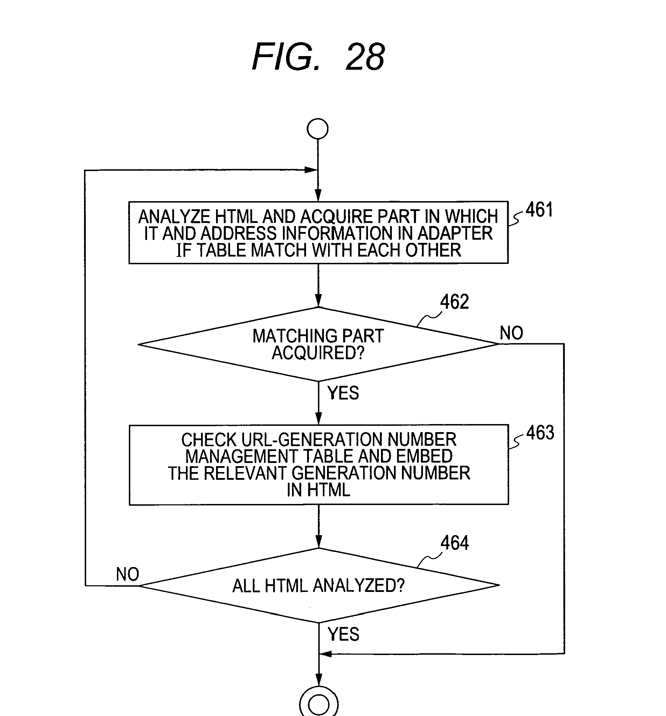

In this embodiment, the generation number giving unit 453 provided for the framework unit 32 is prepared as a filter and is carried out. Detailed description will be given to the processing of the generation number giving unit 453 with reference to the flowchart in FIG. 28.

FIG. 28 is a flowchart illustrating the processing of the filter. This filter gives a generation number by a method of carrying out generation assignment for operation on a Web screen displayed in an information terminal utilizing the application server 11 in the first embodiment of the invention.

In the flowchart in FIG. 28, the generation number giving unit 453 first receives the HTML generated by the framework adapter 43 of the application server 11. Then it determines whether or not there is any notation for making a processing request to the application logic 46 executed at the framework unit 32 in the received HTML. That is, at Step 461, the generation number giving unit 453 acquires a record (matching part) in the adapter IF management table 39 in which the address information contained in the HTML and address information contained in the adapter IF management table 39 agree (match) with each other.

When a processing request is made from a Web screen to the application logic 46, the address information (URL) thereof is contained in HTML sent from the information terminal. For this reason, when any of address information managed by the column 173 in the adapter IF management table 39 is contained in the HTML, the generation number giving unit 453 can determine it to be the processing of invoking application logic 46.

At Step 462, the generation number giving unit 453 determines whether or not a matching part has been acquired.

When a matching part has been acquired, that is, the address information contained in the HTML and address information contained in the adapter IF management table 39 agree with each other, the generation number giving unit 453 carries out the following processing: it stores the IF name indicated in the column 174 in the record in the adapter IF management table 39 in which that address information is described for the processing described later. Then the flow proceeds to Step 463.

When a matching part has not been acquired, the generation number giving unit 453 terminates the processing.

At Step 463, the generation number giving unit 453 carries out the following processing utilizing information in a URL-generation number management table 391: it embeds the generation number information of the logic to be invoked in a description about the processing request to the application logic 46 acquired at Step 461.

FIG. 29 is an explanatory drawing illustrating the URL-generation number management table 391 in the first embodiment of the invention.

In the URL-generation number management table 391, the values in the column 392 indicate IF name. The values in the column 393 indicate the URL of a Web screen to be displayed. The values in the column 394 indicate a corresponding generation number. The URL-generation number management table 391 is stored in the database 28.

That is, this URL-generation number management table 391 indicates, for example, information indicating the following related to a case where some user accesses URL stored in the column 393 in an attempt to display a Web screen: when there is a description that application logic 46 having an IF name stored in the column 392 is caused to carry out a processing request in HTML information returned from the application server 11, the following takes place: the value described in the column 394 is stored as the generation number of the returned HTML information.

The generation number giving unit 453 searches the URL-generation number management table 391 based on the following information: the value of IF name in the column 174 in the adapter IF management table 39 acquired at Step 461 and URL specified by the information terminal Web browser 14 by the HTTP GET message at Step 381 shown in FIG. 27. Then the generation number giving unit acquires the value of generation number indicated in the column 394 of the relevant record. Subsequently, it embeds this generation number in the HTML description using a hidden tag or the like (Step 463).

After the completion of the processing at Step 463, at Step 464, the generation number giving unit 453 determines whether or not the HTML has all been analyzed. When any HTML is left unanalyzed, the application server 11 returns to Step 461 and starts analysis again. When the HTML has all been analyzed, the processing is terminated.

A generation number is embedded in the information of HTML by the above-mentioned processing, that is, the processing illustrated in FIG. 28, or the processing equivalent to Step 383 shown in FIG. 27. At Step 384, thereafter, the generation number giving unit 453 returns the HTML information to the information terminal Web browser 14 used by UserA in response.

Thereafter, UserA (user) makes an operation, such as pressing a button for transmitting a processing request to the application logic 46, on the Web screen displayed in the information terminal Web browser 14 as at Step 385. Then at Step 386, a processing request (HTTP POST message in this embodiment) for executing the application logic 46 is transmitted to the application server 11.

When the application server 11 receives the processing request by the HTTP POST message, it carries out the processing of Step 53 to Step 62 in FIG. 6. In the generation number verification processing at Step 57, the generation number embedded in the HTML and given to the processing request as part of a parameter of HTTP POST is acquired. The generation number of the application logic 46 to be invoked is thereby acquired. (Acquiring version number at Step 387 in FIG. 27 corresponds to this processing.) Thereafter, the application logic 46 of the acquired generation number is executed (corresponding to Step 388 in FIG. 27; details are shown in FIG. 6) and a processing result is returned in response at Step 389.

As mentioned above, the filter function, that is, the generation number giving unit 453 provided in the servlet filter unit 452 is utilized to give a generation number to HTML generated by the application server 11 itself. As a result, the generation number of application logic 46 utilized only in internal information provided in the application server 11 can be managed. Further, since the generation number giving unit 453 is introduced using the filter function specified by the Java Servlet, a generation number can be given without developing servlet logic (framework adapter 43) dedicated to the framework unit 32. This widens the width of pieces of available servlet logic.

In this embodiment, generation assignment is achieved by embedding a generation number in HTML transmitted to a user. Instead, a session object of Java Servlet may be utilized.

Further, the HTTP has the concept of session indicating that a HTTP request message is provided with consecutiveness by using Cookie or the like. The session object refers to a storage area for Java Servlet to, with respect to access from a user in an identical HTTP session, hold temporary information used in that session within the server in memory. When the application server 11 determines HTTP access from a user to be in the same session as that of the previous access, information generated at the previous access can be taken out of the memory 22.

On a Web shopping site or the like, for example, a commodity product selected on the previously displayed Web screen may be displaced on the next screen. This processing is implemented by: holding the information of the commodity product selected on the previous Web screen in a session object once; and acquiring the commodity product information from the session object and displaying it when the next Web screen is displayed.

Also in case of the present framework unit 32, the processing of embedding a generation management number in HTML as mentioned above can be replaced with the processing of storing the generation management number in a session object. Thus it is possible to utilize the generation management number held on the server side as long as a user has access in the identical session and the same functions as described above can be implemented.

Description will be given to a generation assignment method utilizing a referrer (transmission source URL information) when a processing request is received with reference to FIG. 9 and FIG. 30.

Common HTTP messages are given such a Referer header as the description 84 illustrated in FIG. 9. This Referer header is given when the information terminal Web browser 14 transmits an HTTP message and contains information indicating a Web page of what URL the HTTP message is transmitted by way of.

As an example, it will be assumed that a user clicks a link located on a Web page displayed by URL of "hftp:Haaa.co.jp/index.html" to display the page whose URL is "http://bbb.co.jp/index.html". In this case, a Referer header containing "hftp:Haaa.co.jp/index.html" is given to an HTTP message transmitted to a Web server. The framework unit 32 of the invention utilizes a referer-generation number management table 401 and a value of this Referer header to enable generation assignment of application logic 46.

FIG. 30 is an explanatory drawing illustrating the referer-generation number management table 401 in the first embodiment of the invention.

In the referer-generation number management table 401, the values in the column 402 indicate IF name. The values in the column 403 indicate a value of the Referer header contained in a processing request received from a user. The values in the column 404 indicate the generation number of application logic 46. The referer-generation number management table 401 is stored in the database 28.

In this embodiment, the application server 11 receives a processing request from a user, acquires an IF name at Step 92 shown in FIG. 11, and determines that a corresponding IF name exists at Step 93. Before the processing of Step 94, thereafter, the application server 11 searches the referer-generation number management table 401 using the value of Referer header and an IF name described in the received processing request. Then it takes the value in the column 404 of a record obtained as the result of the search as the generation number of application logic 46 and continues with the processing.

As mentioned above, the application server 11 utilizes header information given by the Web browser 14 or the like by default to manage the generation number of application logic 46. This makes it possible to execute generation assignment for application logic 46 with respect to a processing request from HTML generated by a server other than the application server 11.

Description will be given to a generation assignment method utilizing a User-Agent header of SIP with reference to FIG. 7 and FIG. 31.

Common SIP messages are given such a User-Agent header as the description 76 illustrated in FIG. 7. This User-Agent header is given when a SIP terminal such as IP telephone transmits a SIP message and is used to notify a SIP server of the type of its own terminal and the version number of the terminal. In the framework unit 32 of the invention, a User-Agent-generation number management table 411 and the value of this User-Agent header are utilized to enable generation assignment for application logic 46.

FIG. 31 is an explanatory drawing illustrating the User-Agent-generation number management table 411 in the first embodiment of the invention.

In the User-Agent-generation number management table 411, the values in the column 412 indicate IF name. The values in the column 413 indicate the value of User-Agent header contained in a processing request received from a user. The values in the column 414 indicate the generation number of application logic 46. The User-Agent-generation number management table 411 is stored in the database 28.

The method for assigning application logic 46 when a SIP message is received is the same as the above-mentioned processing in the method for assigning generation numbers using the Referer header. Before the processing of Step 94 shown in FIG. 11, the application server 11 searches the User-Agent-generation number management table 411 using the value of User-Agent header and an IF name contained in the received processing request. Then it takes the value in the column 414 of a record obtained as the result of the search as the generation number of application logic 46 and continues with the subsequent processing.

As mentioned above, header information given by the information terminal SIP client 15 by default is utilized to manage the generation number of application logic 46. This makes it possible to execute generation assignment for application logic 46 with respect to a processing request from an information terminal SIP client.

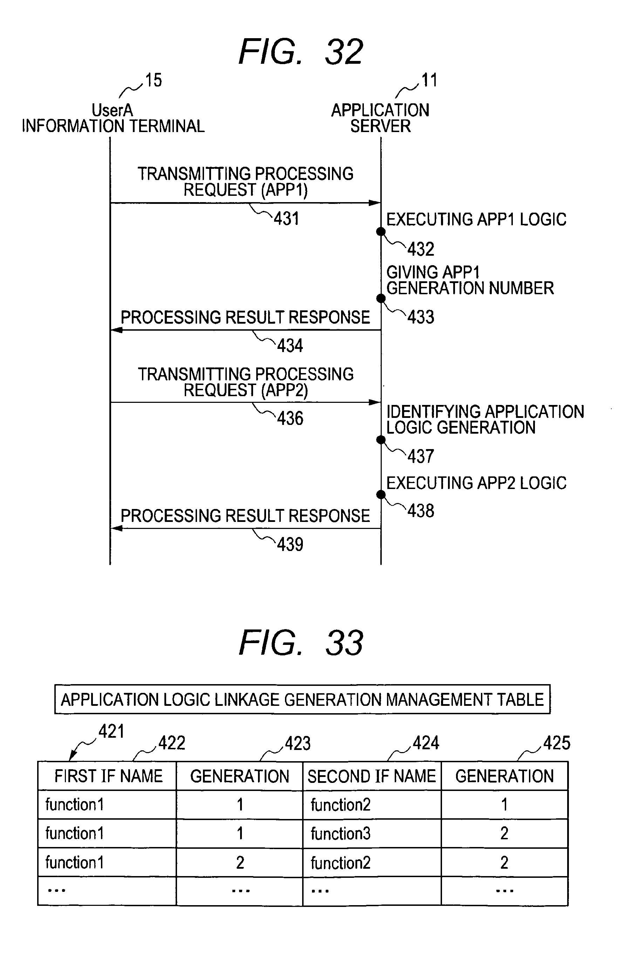

Description will be given to a generation assignment method by a linkage pattern of application logic 46 with reference to FIGS. 32 and 33. This method is used when a linkage is produced between pieces of application logic 46, for example, when some application logic 46 invokes another piece of application logic 46.

FIG. 32 is a sequence diagram illustrating the processing of carrying out generation assignment by a linkage pattern of application logic 46 in the first embodiment of the invention.

At Step 431 in FIG. 32, the information terminal SIP client 15 used by UserA transmits a processing request to the application server 11. The processing until application logic 46 of APP1 is executed at Step 432 is the same as the processing up to Step 59 in the sequence diagram shown in FIG. 6. When after the completion of the processing, the application server 11 returns a processing response (from Step 60 in FIG. 6), it returns the processing response containing the following information to the information terminal SIP client 15: the generation number of APP1 logic processed at Step 433 shown in FIG. 32 and information indicating that the APP1 logic has been carried out.

At Step 436, subsequently, the information terminal SIP client 15 used by UserA transmits a processing request for executing APP2 application logic 46 to the application server 11. At this time, the information terminal SIP client 15 gives the generation number information of APP1 received at Step 434 before transmitting the processing request.

The application server 11 searches an application logic linkage generation number management table 421 in the part of the generation identification processing at Step 437 and thereby determines the generation number of APP2 executed in this processing.

FIG. 33 is an explanatory drawing illustrating the application logic linkage generation management table 421 in the first embodiment of the invention.

In the application logic linkage generation management table 421, the values in the column 422 indicate the IF name of application logic 46 as the source of linkage. The values in the column 423 indicate the generation number of application logic 46 as the source of linkage. The values in the column 424 indicate the IF name of application logic 46 as the destination of linkage. The values in the column 425 indicate the generation number of application logic 46 as the destination of linkage.

In the generation identification processing at Step 437, the application server 11 searches the application logic linkage generation management table 421 using the following: the IF name and generation number of the previously processed application logic 46 contained in the processing request received at Step 436 and the IF name of the application logic 46 processed from now acquired at Step 92 in FIG. 11. The value in the column 425 of a record acquired as the result of this search is taken as the generation number of the application logic 46 processed from now and the following subsequent processing is carried out: execution of the application logic 46 of APP2 (Step 438) and result response to the information terminal SIP client 15 (Step 439).

As mentioned above, the application logic 46 as the source of linkage gives its own generation number and the application server 11 manages the correspondence between the generation numbers of the source and destination of linkage on the application logic linkage generation management table 421. As a result, the application logic 46 as the source of linkage can achieve linkage between pieces of application logic 46 regardless of the generation number currently held by the application logic 46 as the destination of linkage.

More specific description will be given. When the application logic 46 as the source of linkage changes the generation number of application logic 46 as the destination of linkage to be invoked, it is unnecessary to change the application logic 46 as the source of linkage or the destination of linkage. The generation number to be invoked can be changed by only changing the configuration of the application logic linkage generation management table 421.

In the sequence diagram shown in FIG. 32, at Step 434 after the completion of the processing of APP1, a processing result is returned to the information terminal SIP client 15 used by UserA. Thereafter, the information terminal SIP client 15 used by UserA transmits a processing request to APP2 which is the next processing. Instead, the processing of Steps 434 and 436 in the sequence diagram may be omitted and pieces of application logic 46 can be internally linked together in the application server 11.

Even in this case, the basic idea is identical. The application server 11 internally links together pieces of application logic 46 in the application server 11, and gives the generation number given at Step 433 when invoking APP2 and thereby acquires the generation number of APP2.

In this embodiment, generation numbers are stored in one column of each database illustrated in FIG. 2. Instead, they may be stored in a generation number database using application logic 46 as a key.

According to this embodiment, as mentioned above, the framework unit 32 for managing application logic 46 is provided in the higher-order portion of existing Java Servlet. In the framework unit 32, each piece of application logic 46 is managed in a table in a predetermined database by combining an external IF, application body information, input information, output information, a program binary utilized in the input/output information, and error information.

The Java Servlet is provided with an adapter that interfaces the framework unit 32 and an existing Servlet with reach other and the adapter converts input/ output values and the error output of application logic 46. The generation information of the application logic 46 is managed in association with each the above information.

According to the invention, the following processing can be carried out because of these configurations:
1. A database is managed by bringing IF information and application logic 46 information into correspondence with each other. This makes it possible to add, delete, or update an application without rewriting web.xml or sip.xml. As a result, application logic 46 can be added, deleted, or updated without stopping the system.
2. The input/output information of application logic 46 is also managed together and is converted at the framework unit 32 portion. Therefore, arguments and return values on the application logic 46 side can be freely set. Even though a processing request having a wrong input value is received, error determination can be carried out at the framework unit 32 portion before application logic 46 is executed.
3. In addition to the main body of an application file, input/output information, error output information, and the like are managed on a database. As a result, the program specifications of application logic 46 are not bound by the Java Servlet specifications and the degree of freedom is enhanced.
4. Since the framework unit 32 is built on Java Servlet, any main body is acceptable as long as the server satisfies the Java Servlet specifications.
5. Since application logic 46 information is managed on the database 28, an application can be easily added, deleted, or updated. The reason for this is as follows: in conventional servlets, it is required to log on the application server 11 by SSH or Telnet, rewrite web.xml and sip.xml, and place an application file; in the invention, meanwhile, all these operations can be carried out by connecting a database and issuing an SQL query. Addition and deletion of an application and generation of an update tool on the development environment side can be carried out by only ordinary DB connection without such operation as connection to a server by SSH or Telnet or file copy; therefore, the above operations are facilitated.

## Claims

1. A computer that receives one or more processing requests from at least one or more clients through a network and executes an application for processing the received processing requests using a Java servlet,
wherein each of the processing requests contains one or more addresses as the targets of the processing requests,
wherein the computer is connected to a database including application information in which an identifier uniquely identifying the application and binary logic for executing the application are brought into correspondence with each other and adapter information in which the identifier and each the address are brought into correspondence with each other,
wherein when the computer receives the processing request, the computer identifies the binary logic based on an address contained in the received processing request, and
wherein the computer executes the identified binary logic and thereby executes the application.

2. The computer according to claim 1, comprising:
a framework executing the application; and
one or more framework adapters sending the received processing request to the framework,
wherein each of the framework adapters is connected to the database,
wherein each of the framework adapters searches the adapter information and thereby acquires the identifier corresponding to an address contained in the received processing request,
wherein the framework identifies the binary logic of an executed application from the application information based on the acquired identifier, and
wherein when updating of the database is requested, the framework executes processing in accordance with application information corresponding to the identifier and after the completion of the processing, the database is updated.

3. The computer according to claim 2,
wherein the database includes input value information for conversion into an input form to the application and output value information for converting an output form from the application,
wherein each of the framework adapters acquires information for conversion into an input form to the application from the input value information based on the identifier,
wherein each of the framework adapters coverts an input value contained in the received processing request into the acquired input form using information acquired from the input value information,
wherein each of the framework adapters acquires information for converting an output form from the application from the output value information based on the acquired identifier, and
wherein each of the framework adapters converts an output from the application into a form for transmission to the client using information acquired from the output value information.

4. The computer according to claim 3,
wherein the database includes input/output class information in which the identifier, an input class for inputting an input value to the application, and an output class for outputting an output value from the application are brought into correspondence with one another,
wherein each of the framework adapters acquires the input class from the input/output information based on the acquired identifier, and
wherein the application refers to the acquired input class to receive the input value.

5. The computer according to claim 3,
wherein the database includes error information in which the identifier, the type of an error outputted from the application, and a form for returning the error to the client in response are brought into correspondence with one another,
wherein each of the framework adapters acquires a form for returning the error to the client in response from the error information based on the acquired identifier, and
wherein each of the framework adapters converts an error outputted from the application into a form for responding to the client using error information acquired from the error information.

6. The computer according to claim 3,
wherein the database includes a generation number for uniquely identifying the application each time of change thereof,
wherein each of the framework adapters gives the generation number of the application that processed a processing request sent from the client to a response to the processing request, and
wherein when the generation number is contained in a processing request transmitted from the client again, the framework processes the processing request by an application identified by a generation number contained in the processing request.

7. A computer system including a computer as claimed in any one of claims 1 to 6.

8. An application execution method in a computer for receiving one or more processing requests from at least one or more clients through a network and processing the received processing requests using a Java servlet,
wherein each of the processing requests contains one or more addresses as the targets of the processing requests, and
wherein the computer is connected to a database including application information in which an identifier uniquely identifying the application and binary logic for executing the application are brought into correspondence with each other and adapter information in which the identifier and each the address are brought into correspondence with each other,
the method comprising:
when the computer receives the processing request, identifying the binary logic based on an address contained in the received processing request; and
the computer executing the identified binary logic and thereby executing the application.

9. The application execution method according to claim 8,
wherein the computer includes a framework executing the application and one or more framework adapters sending the received processing request to the framework, and
wherein each of the framework adapters is connected to the database,
the method comprising:
each of the framework adapters searching the adapter information and thereby acquiring the identifier corresponding to an address contained in the received processing request;
the framework identifying the binary logic of an executed application from the application information based on the acquired identifier; and
when updating of the database is requested, the framework executing processing in accordance with application information corresponding to the identifier and after the completion of the processing, the database being updated.

10. The application execution method according to claim 9, the database including input value information for conversion into an input form to the application and output value information for converting an output form from the application,
the method comprising:
each of the framework adapters acquiring information for conversion into an input form to the application from the input value information based on the identifier;
each of the framework adapters converting an input value contained in the received processing request into the acquired input form using information acquired from the input value information;
each of the framework adapters acquiring information for converting an output form from the application from the output value information based on the acquired identifier; and
each of the framework adapters converting an output from the application into a form for transmission to the client using information acquired from the output value information.

11. The application execution method according to claim 10, the database including input/output class information in which the identifier, an input class for inputting an input value to the application, and an output class for outputting an output value from the application are brought into correspondence with one another,
the method comprising:
each of the framework adapters acquiring the input class from the input/ output information based on the acquired identifier; and
the application referring to the acquired input class to receive the input value.

12. The application execution method according to claim 10, the database including error information in which the identifier, the type of an error outputted from the application, and a form for returning the error to the client in response are brought into correspondence with one another,
the method comprising:
each of the framework adapters acquiring a form for returning the error to the client in response from the error information based on the acquired identifier; and
each of the framework adapters converting an error outputted from the application into a form for responding to the client using error information acquired from the error information.

13. The application execution method according to claim 10, the database including a generation number for uniquely identifying the application each time of change thereof,
the method comprising:
each of the framework adapters giving the generation number of the application that processed a processing request sent from the client to a response to the processing request; and
when the generation number is contained in a processing request transmitted from the client again, the framework processing the processing request by an application identified by a generation number contained in the processing request.
